(19) Europäisches Patentamt
European Patent Office
Office européen des brevets

(11) EP 4 130 096 B1

(12) **EUROPEAN PATENT SPECIFICATION**

(45) Date of publication and mention of the grant of the patent:
**12.06.2024 Bulletin 2024/24**

(21) Application number: **21780679.3**

(22) Date of filing: **26.03.2021**

(51) International Patent Classification (IPC):
***C08G 64/06*** (2006.01) ***C08K 5/13*** (2006.01)
***C08K 5/52*** (2006.01) ***C08L 67/04*** (2006.01)
***C08L 69/00*** (2006.01) ***G02B 1/04*** (2006.01)
***C08G 63/06*** (2006.01) ***C08G 63/197*** (2006.01)
***C08G 63/199*** (2006.01)

(52) Cooperative Patent Classification (CPC):
(C-Sets available)
**C08G 63/185; C08G 63/193; C08G 63/199; C08G 63/60; C08G 64/0208; C08G 64/06; C08G 64/305; C08G 64/307; C08L 67/04; C08L 69/00; G02B 1/041** (Cont.)

(86) International application number:
**PCT/JP2021/012772**

(87) International publication number:
**WO 2021/200613 (07.10.2021 Gazette 2021/40)**

(54) **RESIN COMPOSITION, OPTICAL LENS CONTAINING THIS, AND OPTICAL FILM**
HARZZUSAMMENSETZUNG, OPTISCHE LINSE DAMIT UND OPTISCHER FILM
COMPOSITION DE RÉSINE, LENTILLE OPTIQUE CONTENANT CELLE-CI, ET FILM OPTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.03.2020 JP 2020062783**

(43) Date of publication of application:
**08.02.2023 Bulletin 2023/06**

(73) Proprietor: **MITSUBISHI GAS CHEMICAL COMPANY, INC.**
**Chiyoda-ku**
**Tokyo 100-8324 (JP)**

(72) Inventors:
- **YOSHIMURA, Yasuaki**
  **Hiratsuka-shi, Kanagawa 254-0016 (JP)**
- **KONDO, Mitsuteru**
  **Tokyo 100-8324 (JP)**
- **KATO, Noriyuki**
  **Tokyo 100-8324 (JP)**
- **HONDA, Eiichi**
  **Hiratsuka-shi, Kanagawa 254-0016 (JP)**
- **HIRAKAWA, Manabu**
  **Hiratsuka-shi, Kanagawa 254-0016 (JP)**
- **SATAKE, Yuichiro**
  **Hiratsuka-shi, Kanagawa 254-0016 (JP)**
- **NISHIMORI, Katsushi**
  **Tokyo 125-8601 (JP)**
- **MURATA SUZUKI, Shoko**
  **Tokyo 125-8601 (JP)**
- **NYUUI, Tatsuki**
  **Tokyo 125-8601 (JP)**
- **SUEMATSU, Mitsutake**
  **Tokyo 100-8324 (JP)**

(74) Representative: **Hoffmann Eitle**
**Patent- und Rechtsanwälte PartmbB**
**Arabellastraße 30**
**81925 München (DE)**

(56) References cited:
**EP-A1- 3 521 867**
**WO-A1-2016/190317**
**WO-A1-2016/190317**
**WO-A1-2018/062325**
**WO-A1-2018/062325**
**WO-A1-2019/146575**
**JP-A- 2007 161 917**
**JP-A- 2010 284 943**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 67/04, C08K 5/101, C08K 5/1345, C08K 5/526, C08L 69/00;**
**C08L 67/04, C08K 5/101, C08K 5/1345, C08K 5/526, C08L 69/00, C08L 69/00;**
**C08L 69/00, C08K 5/101, C08K 5/1345, C08K 5/526, C08L 67/04;**
**G02B 1/041, C08L 69/00, C08L 45/00**

**Description**

TECHNICAL FIELD

The present invention relates to a resin composition, and an optical lens and an optical film containing the same.

BACKGROUND ART

Optical glasses or transparent resins for optical use are used as materials for optical elements used in liquid crystal displays, optical disc devices, optical systems of projection screens, and optical systems of various cameras including cameras, film-integrated cameras, and video cameras. Optical glass is excellent in heat resistance, transparency, dimensional stability, and chemical resistance, and there are various kinds of materials with a range of refractive indices (nd) and Abbe numbers (vd). However, they have problems such as high material cost, poor formability, and low productivity. These problems are significant practical obstacles particularly in forming such optical glass into aspherical lenses used for aberration correction which involves an extremely advanced technique and high cost.

In contrast to the optical glass described above, optical lenses made of a transparent resin for optical use, especially a transparent thermoplastic resin, are advantageous in that they can be mass-produced by injection molding and in that even aspherical lenses can be easily manufactured using them, and thus currently they are mainly applied to camera lenses. Examples of transparent resins for optical use include polyester resins (Patent Documents 1-3), polycarbonate resins made of bisphenol A, and polymethyl methacrylate.

Generally, optical systems of cameras use multiple concave and convex lenses which have different optical characteristics from each other to correct aberrations for the purpose of improving image quality of the color image. In one example, chromatic aberration is corrected by combining a concave lens having a high refractive index and low Abbe number with a convex lens having a low refractive index and high Abbe number. In this case, chromatic aberration formed by a convex lens is synthetically nullified by forming chromatic aberration of the opposite sign with a concave lens. Greater chromatic aberration results in larger color blur, which remarkably degrades the image quality of the color image.

Under these circumstances, a resin composition and an optical lens having excellent continuous moldability, high refractive index and low Abbe number have been sought but have not been achieved until now.

PRIOR ART DOCUMENTS

PATENT DOCUMENTS

Patent Document 1: Japanese Patent No. 5849967
Patent Document 2: WO2015/163323A1
Patent Document 3: WO2018/62327A1

SUMMARY OF THE INVENTION

PROBLEMS TO BE SOLVED BY THE INVENTION

A problem to be solved by the present invention is to provide a resin composition having excellent continuous moldability, high refractive index and low Abbe number. The present invention also has an objective of providing a superior optical lens by using this resin composition.

MEANS FOR SOLVING THE PROBLEMS

In order to solve the above-described problem, the present inventors have studied intensively and found that the above-described problem can be solved with the following resin composition and optical lens, thereby achieving the present invention.

The invention is, for example, as follows.

<1> A resin composition comprising:

a resin containing a structural unit (A) represented by General formula (1) below; and

a resin containing a structural unit (B) represented by General formula (2) below and/or a structural unit (C) represented by General formula (3) below:

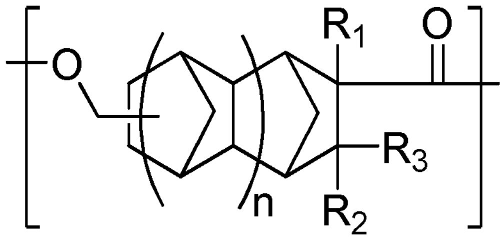

(1)

in General formula (1), $R_1$ represents a hydrogen atom, a methyl group or an ethyl group, $R_2$ and $R_3$ each independently represent a hydrogen atom or a methyl group, and n represents 0 or 1;

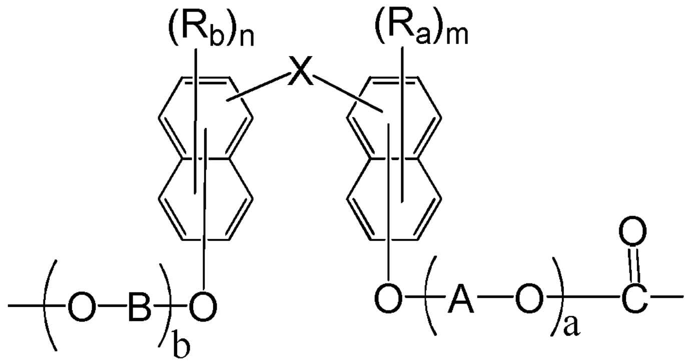

(2)

in General formula (2), $R_a$ and $R_b$ are each independently selected from the group consisting of a hydrogen atom, a halogen atom, a C1-C20 alkyl group, a C1-C20 alkoxyl group, a C5-C20 cycloalkyl group, a C5-C20 cycloalkoxyl group, a C6-C20 aryl group, a C6-C20 heteroaryl group or a C6-C20 aryloxy group containing one or more heteroatoms selected from O, N and S, and -C≡C-$R_h$,
$R_h$ represents a C6-C20 aryl group or a C6-C20 heteroaryl group containing one or more heteroatoms selected from O, N and S,
X represents a single bond or a fluorene group,
A and B each independently represent a C1-C4 alkylene group,
m and n each independently represent an integer from 0 to 6, and
a and b each independently represent an integer from 0 to 10;

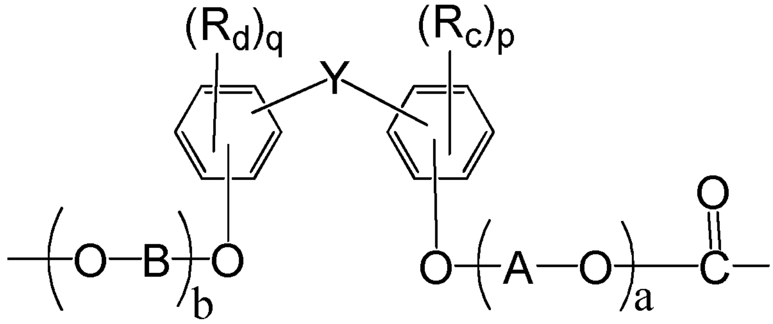

(3)

in General formula (3), $R_c$ and $R_d$ are each independently selected from the group consisting of a hydrogen atom, a halogen atom, a C1-C20 alkyl group, a C1-C20 alkoxyl group, a C5-C20 cycloalkyl group, a C5-C20 cycloalkoxyl group, and a C6-C20 aryl group,
Y represents a fluorene group,
A and B each independently represent a C1-C4 alkylene group,

p and q each independently represent an integer from 0 to 4, and
a and b each independently represent an integer from 0 to 10.

<2> The resin composition according to <1> above, wherein the resin containing the structural unit (A) represented by General formula (1) above is a polyester resin, and the resin containing the structural unit (B) represented by General formula (2) above and/or the structural unit (C) represented by General formula (3) above is a polycarbonate resin.

<3> The resin composition according to either one of <1> and <2> above, further comprising a resin containing a structural unit (D) represented by General formula (4) below:

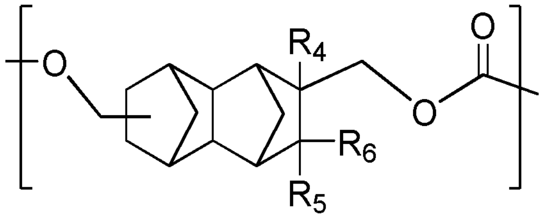

(4)

in General formula (4), $R_4$ represents a hydrogen atom, a methyl group, or an ethyl group, and $R_5$ and $R_6$ each independently represent a hydrogen atom or a methyl group.

<4> The resin composition according to <3> above, wherein the resin containing the structural unit (D) represented by General formula (4) above is a polycarbonate resin.

<5> The resin composition according to any one of <1> to <4> above, wherein the structural unit (B) represented by General formula (2) above comprises at least one of structural units represented by General formulae (2a) and (2b) below:

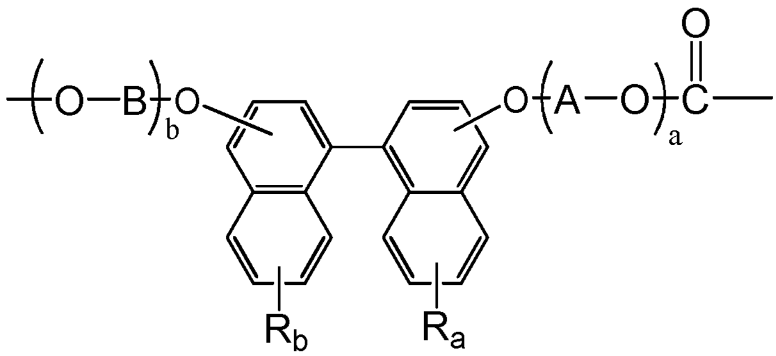

(2a)

in General formula (2a), $R_a$, $R_b$, A, B, a, and b are synonymous with those in General formula (2), respectively;

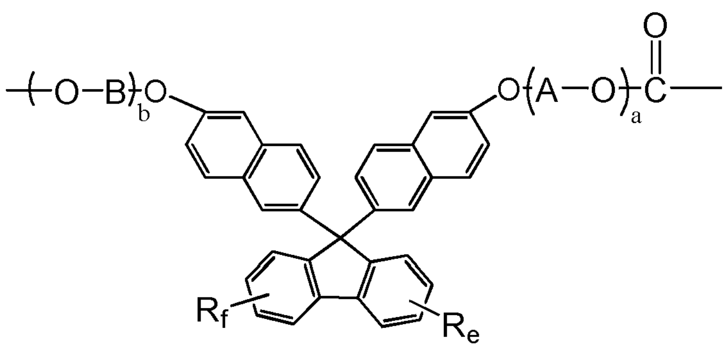

(2b)

in General formula (2b), A, B, a, and b are synonymous with those in General formula (2), respectively; and $R_e$ and $R_f$ are each independently selected from the group consisting of a hydrogen atom, a C1-C20 alkyl group, a C1-C20 alkoxyl group, a C5-C20 cycloalkyl group, a C5-C20 cycloalkoxyl group, a C6-C20 aryl group, and a C6-C20 aryloxy

group.

<6> The resin composition according to any one of <1> to <5> above, wherein $R_a$ and $R_b$ in General formula (2) above each independently represent a hydrogen atom, a phenyl group, a naphthyl group, or a substituent selected from the group consisting of the following:

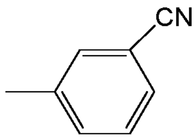,
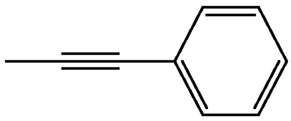,
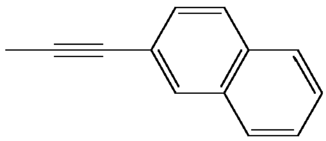,
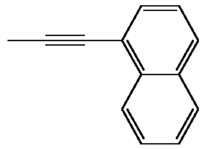,

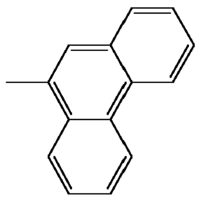,
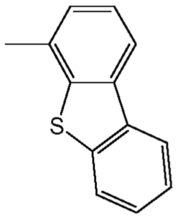,
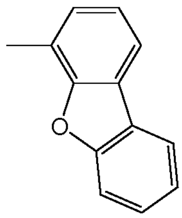.

<7> The resin composition according to any one of <1> to <6> above, wherein the structural unit (C) represented by General formula (3) above comprises a structural unit represented by General formula (3a) below:

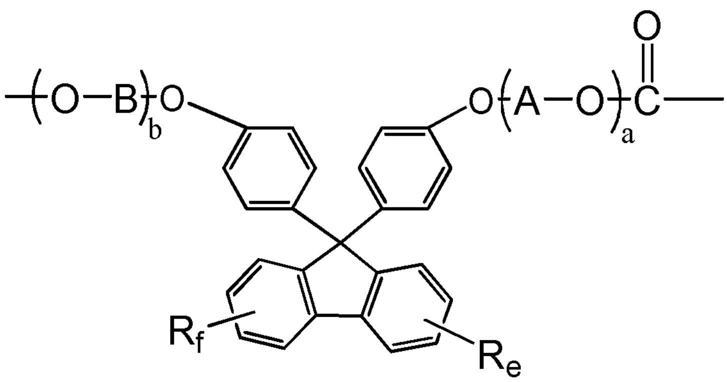
(3a)

in General formula (3a), A, B, a, and b are synonymous with those in General formula (3), respectively; and $R_e$ and $R_f$ are each independently selected from the group consisting of a hydrogen atom, a C1-C20 alkyl group, a C1-C20 alkoxyl group, a C5-C20 cycloalkyl group, a C5-C20 cycloalkoxyl group, a C6-C20 aryl group, and a C6-C20 aryloxy group.

<8> The resin composition according to any one of <1> to <7> above, wherein the mass ratio (A/B) of the structural unit (A) to the structural unit (B) is 99/1 to 1/99.

<9> The resin composition according to any one of <1> to <8> above, wherein the mass ratio (A/C) of the structural unit (A) to the structural unit (C) is 99/1 to 1/99.

<10> The resin composition according to either one of <3> and <4> above, wherein the mass ratio (A/D) of the structural unit (A) to the structural unit (D) is 99/1 to 1/99.

<11> The resin composition according to any one of <1> to <10> above, further comprising an antioxidant.

<12> The resin composition according to <11> above, wherein the antioxidant is a phosphite antioxidant and/or a phenolic antioxidant.

<13> The resin composition according to any one of <1> to <12> above, wherein $R_1$, $R_2$, and $R_3$ in General formula (1) above represent hydrogen atoms, and n represents 1.

<14> A molded body comprising the resin composition according to any one of <1> to <13> above.

<15> The molded body according to <14> above, wherein the molded body is an optical lens.

<16> The molded body according to <14> above, wherein the molded body is an optical film.

ADVANTAGEOUS EFFECT OF THE INVENTION

A resin composition of the present invention has excellent continuous moldability, high refractive index and low Abbe number. Moreover, the resin composition of the present invention can be used to obtain a superior optical lens.

EMBODIMENTS FOR CARRYING OUT THE INVENTION

Hereinafter, an embodiment for carrying out the present invention (hereinafter, also simply referred to as "this embodiment") will be described in detail. The following embodiment is an example for illustrating the present invention and is not intended to limit the invention to what follows. The present invention can be carried out with appropriate modifications within the scope of the invention.

[Resin containing structural unit (A)]

A resin composition of the embodiment comprises a resin containing a structural unit (A) represented by General formula (1) below (hereinafter, also simply referred to as the "structural unit (A)"), and further comprises a resin containing a structural unit (B) represented by General formula (2) below and/or a structural unit (C) represented by General formula (3) below. The resin containing the structural unit (A) is preferably a polyester resin or a polyester carbonate resin, more preferably a polyester resin, because of its relatively high refractive index, relatively high glass transition temperature (Tg), and good heat resistance.
The resin containing the structural unit (A) may include any of random, block, and alternating copolymer structures.
The weight average molecular weight (Mw) of the resin containing the structural unit (A) is not particularly limited as long as it has the effect of the present invention, but considering the balance between the mechanical strength and moldability, it is preferably 10,000 to 100,000, more preferably 10,000 to 50,000, still more preferably 15,000 to 45,000, and yet still more preferably 20,000 to 40,000. The weight average molecular weight (Mw) can be measured using the method described in the example below.

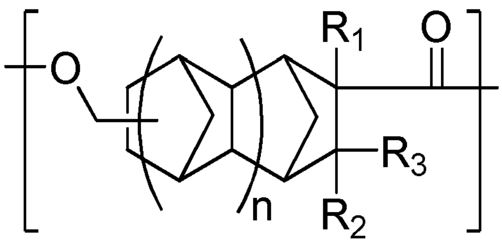
(1)

In General formula (1), $R_1$ represents a hydrogen atom, a methyl group, or an ethyl group, $R_2$ and $R_3$ each independently represent a hydrogen atom or a methyl group, and n represents 0 or 1.
In General formula (1), $R_1$ preferably represents a hydrogen atom or a methyl group, and $R_2$ and $R_3$ preferably represent hydrogen atoms. In this embodiment, $R_1$, $R_2$, and $R_3$ in General formula (1) are more preferably hydrogen atoms from the viewpoint of heat resistance.
To further improve the heat resistance, n in General formula (1) is preferably 1.
In this embodiment, considering the balance between heat resistance and optical properties, the content of the structural unit (A) relative to that of all structural units of the resin containing the structural unit (A) should be 10 to 95 mol%. If the above content is 10 mol% or more, sufficiently good heat resistance and good optical properties are likely to be achieved. The above content is preferably 95 mol% or less so that moldability can be improved while ensuring good heat resistance and good optical properties. From the same viewpoint as above, the content of the structural unit (A) is more preferably 15 to 95 mol%, and still more preferably 20 to 95 mol%.
In one preferred aspect, a resin composition of the present invention contains a homopolyester resin composed of the structural unit (A).
In another preferred aspect, a resin composition of the present invention contains, in addition to the structural unit (A), a copolymer resin (preferably, a copolymerized polyester resin) containing a structural unit (A-2) and a structural unit (A-3) described below.
The structural unit (A-2) is not particularly limited as long as it is a unit derived from a diol, where specific examples thereof include units derived from diols such as ethylene glycol, trimethylene glycol, 1,4-butanediol, 1,5-pentanediol, 1,6-hexanediol, diethylene glycol, propylene glycol, neopentyl glycol, 1,3-cyclohexanedimethanol, 1,4-cyclohexanedimethanol, 1,2-decahydronaphthalene dimethanol, 1,3-decahydronaphthalene dimethanol, 1,4-decahydronaphthalene dimethanol, 1,5-decahydronaphthalene dimethanol, 1,6-decahydronaphthalene dimethanol, 2,7-decahydronaphthalene dimethanol, tetralin dimethanol, norbornane dimethanol, tricyclodecane dimethanol, pentacyclopentadecane dimethanol, decahydro-1,4:5,8-dimethanonaphthalene dimethanol, norbornanediol, cyclohexanediol, 2,2'-bis(4-hydroxycyclohexyl)propane, adamantanediol, decahydro-1,4:5,8-dimethanonaphthalenediol, 9,9-bis[4-(2-hydroxyethoxy)phenyl]fluorene, 9,9-bis[4-(2-hydroxypropoxy)phenyl]fluorene, 9,9-bis[4-(2-hydroxyethoxy)-3-methylphenyl]fluorene, 9,9-bis[4-(2-hydroxypropoxy)-3-methylphenyl]fluorene, 9,9-bis[4-(2-hydroxyethoxy)-3,5-dimethylphenyl]fluorene 9,9-bis[4-(2-hydroxyethoxy)-3-phenylphenyl]fluorene, 9,9-bis[4-(2-hydroxypropoxy)-3-phenylphenyl]fluorene, 9,9-bis[6-(2-hydroxyethoxy)-2-naphthyl]fluorene, 9,9-bis[6-(2-hydroxypropoxy)-2-naphthyl]fluorene 9,9-bis(2-hydroxyethyl)fluorene, xylylene glycol, 3,9-bis(1,1-dimethyl-2-hydroxyethyl)-2,4,8,10-tetraoxaspiro[5.5]undecane, 1,4:3,6-dianhydro-D-sorbitol, and 2,2,4,4-tetramethyl-1,3-cyclobutanediol.

The structural unit (A-2) is preferably a unit derived from an aliphatic diol or a diol having a fluorene structure so that good optical properties can be obtained. More preferably, the unit derived from a diol having a fluorene structure mentioned above has a cardo structure along with the fluorene structure. The unit derived from an aliphatic diol is more preferably a unit derived from 1,4-cyclohexanedimethanol, ethylene glycol, 3,9-bis(1,1-dimethyl-2-hydroxyethyl)-2,4,8,10-tetraoxaspiro[5.5]undecane, 1,4:3,6-dianhydro-D-sorbitol, or decahydro-1,4:5,8-dimethanonaphthalene dimethanol. The unit derived from a diol having a fluorene structure is more preferably a unit derived from 9,9-bis[4-(2-hydroxyethoxy)phenyl]fluorene, 9,9-bis[4-(2-hydroxyethoxy)-3-methylphenyl]fluorene, and 9,9-bis[4-(2-hydroxyethoxy)-3-phenylphenyl]fluorene. Optical isomers of these units are not particularly limited, and they can be a cis isomer, a trans isomer, or a mixture of both.

These units may be contained alone or in combination of two or more kinds.

The structural unit (A-3) is not particularly limited as long as it is a unit derived from a dicarboxylic acid or an ester-forming derivative thereof, where specific examples thereof include: structural units derived from an aromatic dicarboxylic acid and/or a derivative thereof such as terephthalic acid, isophthalic acid, phthalic acid, 1,3-naphthalene dicarboxylic acid, 1,4-naphthalene dicarboxylic acid, 1,5-naphthalene dicarboxylic acid, 2,6-naphthalene dicarboxylic acid, 2,7-naphthalene dicarboxylic acid, 2-methyl terephthalic acid, biphenyldicarboxylic acid, and tetraline dicarboxylic acid; units derived from an aliphatic dicarboxylic acid and/or a derivative thereof such as succinic acid, glutaric acid, adipic acid, pimelic acid, suberic acid, azelaic acid, sebacic acid, decanedicarboxylic acid, dodecanedicarboxylic acid, cyclohexanedicarboxylic acid, decalindicarboxylic acid, norbornandicarboxylic acid, tricyclodecanedicarboxylic acid, pentacyclopentadecanedicarboxylic acid, 3,9-bis(1,1-dimethyl-2-carboxyethyl)-2,4, 8,10-tetraoxaspiro[5.5]undecane, 5-carboxy-5-ethyl-2-(1,1-dimethyl-2-carboxyethyl)-1,3-dioxane, 1,4:5,8-dimethanodecahydronaphthalenedicarboxylic acid, adamantanedicarboxylic acid, and dimeric acid; and units derived from a dicarboxylic acid having a fluorene structure and/or a derivative thereof such as 9,9-bis(carboxymethyl)fluorene, 9,9-bis(1-carboxyethyl)fluorene, 9,9-bis(2-carboxyethyl)fluorene, 9,9-bis(1-carboxypropyl)fluorene, 9,9-bis(2-carboxypropyl)fluorene, 9,9-bis(2-carboxy-1-methylethyl)fluorene 9,9-bis(2-carboxy-1-methylpropyl)fluorene, 9,9-bis(2-carboxybutyl)fluorene, 9,9-bis(2-carboxy-1-methylbutyl)fluorene, and 9,9-bis(5-carboxypentyl)fluorene.

The structural unit (A-3) is preferably a unit derived from an aliphatic dicarboxylic acid, an ester-forming derivative thereof, a dicarboxylic acid having a fluorene structure, or an ester-forming derivative thereof, because good optical properties can be obtained. More preferably, the unit derived from a dicarboxylic acid having a fluorene structure or an ester-forming derivative thereof mentioned above has a cardo structure along with the fluorene structure. The unit derived from an aliphatic dicarboxylic acid or an ester-forming derivative thereof is more preferably a unit derived from dimethyl 1,4-cyclohexanedicarboxylic acid considering the balance between the properties, i.e., heat resistance and optical properties. The unit derived from a dicarboxylic acid having a fluorene structure or an ester-forming derivative thereof is still more preferably a unit derived from 9,9-bis(methoxycarbonylmethyl)fluorene, 9,9-bis(2-methoxycarbonylethyl)fluorene, or 9,9-bis(methoxycarbonylpropyl)fluorene considering the balance between the properties, i.e., heat resistance and optical properties. Optical isomers of these units are not particularly limited, and they can be a cis isomer, a trans isomer, or a mixture of both.

These units may be contained alone or in combination of two or more kinds.

In this embodiment, the resin containing the structural unit (A) may contain, in addition to the structural units (A), (A-2) and (A-3), other structural unit such as a structural unit (A-4) derived from a hydroxyl group and a carboxylic acid or an ester-forming derivative thereof. The structural unit (A-4) is not particularly limited, but it may be, for example, a structural unit derived from an oxy acid such as glycolic acid, lactic acid, hydroxybutyric acid, 2-hydroxyisobutyric acid, hydroxybenzoic acid, 6-hydroxycaproic acid, 4-hydroxycyclohexanecarboxylic acid, and/or a derivative thereof.

Although the resin containing the structural unit (A) is not particularly limited in this embodiment as long as it has the effect of the present invention, it preferably satisfies one or more of (1) through (3) below, and more preferably satisfies all of (1) through (3) below.

(1) In this embodiment, the glass transition temperature (Tg) of the resin containing the structural unit (A) is not particularly limited as long as it has the effect of the present invention, but from the viewpoint of ensuring sufficient heat resistance, it is preferably 120°C or higher, more preferably 130°C or higher, and still more preferably 140°C or higher. The upper limit of the glass transition temperature is not particularly limited, and it is, for example, 240°C. The Tg can be determined by the method described in the example below. Furthermore, the above Tg can be adjusted to lie in the above-mentioned range, for example, by appropriately adjusting the copolymerization ratio of the raw monomers of the polyester resin.

The resin containing the structural unit (A) of the present invention has excellent optical properties (refractive index and Abbe number). Specifically, the specific structure allows the refractive index and Abbe number of the resin to be adjusted as desired while maintaining superior continuous moldability and heat resistance. For example, the refractive index and Abbe number can be adjusted to lie in the following ranges by appropriately adjusting the copolymerization ratio of the raw monomers of the polyester resin.

(2) While the refractive index (nd) for d-line light is not particularly limited as long as it results the effect of the invention, it is preferably 1.60 or less, more preferably 1.59 or less, still more preferably 1.58 or less, yet still more preferably 1.57 or less, and particularly preferably 1.56 or less. Although the lower limit of the refractive index is not particularly limited, it is about 1.40, 1.48, 1.49, or 1.50 considering practical use as an optical lens. The refractive index for d-line light described above can be measured by the method described in the example below.

(3) While the Abbe number (vd) is not particularly limited as long as it results the effect of the invention, it is preferably 28 or higher, more preferably 30 or higher, still more preferably 31 or higher, yet still more preferably 35 or higher, and particularly preferably 40 or higher. Although the upper limit of the Abbe number is not particularly limited, it is about 70, 60, 59, or 58 considering practical use as an optical lens. The Abbe number can be determined by the method described in the example below.

The Abbe number (vd) refers to a value expressed by Formula (1) shown in the example, which shows the wavelength dependence of the refractive index. Thus, if a material has a high Abbe number, change in the refractive index with wavelength is small and chromatic aberration is low.

In addition, when using a resin containing the structural unit (A) of this embodiment, various additives such as an antioxidant, a mold release agent, a UV absorber, a colorant, a light stabilizer, a lubricant, a plasticizer, a flow modifier, a thickening agent, a flame retardant, a crystal nucleating agent, a compatibility agent, a strengthening agent, a bulking agent, a dye, an antistatic agent, an antibacterial agent, a matting agent, a drying control agent, an anti-settling agent, a surfactant, a drying oil, a wax, a filler, a reinforcing agent, a surface smoother, a leveling agent, a polymerization metal deactivator, a curing accelerator, and other known additives such as a molding auxiliary agent can favorably be added to an extent that does not impair the purpose of this embodiment.

[Method for producing resin containing structural unit (A)]

A resin containing the structural unit (A) can be obtained by homopolymerizing a monomer (raw monomer) corresponding to the structural unit (A), or by copolymerizing monomers corresponding to the structural units (A), (A-2), and (A-3). Hereinafter, a method for producing a monomer corresponding to the structural unit (A) will be described. Such a monomer is represented, for example, by the following General formula (1-2).

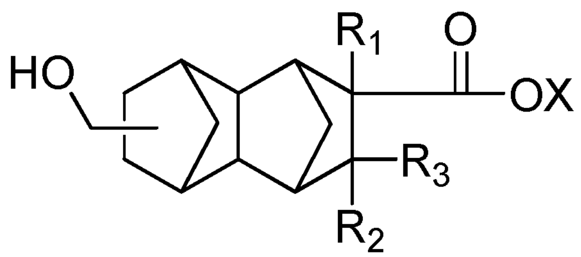

(1-2)

In General formula (1-2), $R_1$ represents a hydrogen atom, a methyl group or an ethyl group, $R_2$ and $R_3$ each independently represent a hydrogen atom or a methyl group, and X represents a hydrogen atom or a hydrocarbon group optionally containing a hydroxyl group with 4 or less carbon atoms.

In General formula (1-2), $R_1$ preferably represents a hydrogen atom or a methyl group. $R_2$ and $R_3$ preferably represent hydrogen atoms. Examples of the hydrocarbon groups include, but are not limited to, a methyl group, an ethyl group, a propyl group, a butyl group, a vinyl group, a 2-hydroxyethyl group, and a 4-hydroxybutyl group.

The resin containing the structural unit (A) of this embodiment can be produced using a transesterification

catalyst, an esterification catalyst, a polycondensation catalyst, etc. that are used for producing ordinary polyester resins. While these catalysts are not particularly limited, examples thereof include compounds (e.g., fatty acid salts, carbonates, phosphates, hydroxides, chlorides, oxides, and alkoxides) of metals such as zinc, lead, cerium, cadmium, manganese, cobalt, lithium, sodium, potassium, calcium, nickel, magnesium, vanadium, aluminum, titanium, antimony, germanium, and tin, and magnesium metal. These catalysts can be used alone or in combination of two or more kinds. Among these catalysts, compounds of manganese, cobalt, zinc, titanium, calcium, antimony, germanium, and tin are favorable, and compounds of manganese, titanium, antimony, germanium, and tin are more favorable. While the amount of the catalyst used is not particularly limited, it is, for example, preferably 1 to 1,000 ppm, more preferably 3 to 750 ppm, and still more preferably 5 to 500 ppm in terms of a metal component in the raw material of the polyester resin.

The reaction temperature of the polymerization reaction described above depends on the kind, amount, etc. of the catalyst used, but it is usually determined in a range of 150°C to 300°C, preferably 180°C to 280°C, considering the reaction rate and coloration of the resin. The pressure in the reaction tank is preferably regulated from ambient atmosphere to a final pressure of 1 kPa or less, and more preferably to a final pressure of 0.5 kPa or less.

If desired, a phosphorus compound may be added upon the above-described polymerization reaction. Examples of the phosphorus compound include, but are not limited to, phosphoric acid, phosphorous acid, a phosphate ester, and a phosphite ester. Examples of the phosphate ester include, but are not limited to, methyl phosphate, ethyl phosphate, butyl phosphate, phenyl phosphate, dimethyl phosphate, diethyl phosphate, dibutyl phosphate, diphenyl phosphate, trimethyl phosphate, triethyl phosphate, tributyl phosphate, and triphenyl phosphate. Examples of the phosphite ester include, but are not limited to, methyl phosphite, ethyl phosphite, butyl phosphite, phenyl phosphite, dimethyl phosphite, diethyl phosphite, dibutyl phosphite, diphenyl phosphite, trimethyl phosphite, triethyl phosphite, tributyl phosphite, and triphenyl phosphite. These catalysts can be used alone or in combination of two or more kinds. The concentration of phosphorus atoms in the resin containing the structural unit (A) of this embodiment is preferably 1 to 500 ppm, more preferably 5 to 400 ppm, and still more preferably 10 to 200 ppm.

In addition, a stabilizer such as an etherification inhibitor, a heat stabilizer or a light stabilizer, a polymerization modifier, and the like can be added upon producing the resin containing the structural unit (A) of this embodiment.

Furthermore, various additives such as an antioxidant, a mold release agent, a UV absorber, a colorant, a light stabilizer, a lubricant, a plasticizer, a flow modifier, a thickening agent, a flame retardant, a crystal nucleating agent, a compatibility agent, a strengthening agent, a bulking agent, a dye, an antistatic agent, an antibacterial agent, a matting agent, a drying control agent, an anti-settling agent, a surfactant, a drying oil, a wax, a filler, a reinforcing agent, a surface smoother, a leveling agent, a polymerization metal deactivator, and a curing accelerator, and a molding auxiliary agent, etc. can be added to the resin containing the structural unit (A) of this embodiment to an extent that does not impair the purpose of this embodiment.

[Resin containing structural unit (B) and/or structural unit (C)]

In addition to the resin containing the structural unit (A) described above, the resin composition of this embodiment contains a resin containing a structural unit (B) represented by General formula (2) below (hereinafter, also simply referred to as the "structural unit (B)") and/or a structural unit (C) represented by General formula (3) below (hereinafter, also simply referred to as the "structural unit (C)"). The resin containing the structural unit (B) and/or the structural unit (C) is particularly preferably a polycarbonate resin because of its relatively low water absorption and excellent mechanical strength.

Although the resin containing the structural unit (B) and/or the structural unit (C) described hereinbelow is a polycarbonate resin, it may also be a resin other than a polycarbonate resin, for example, a polyester resin or a polyester carbonate resin.

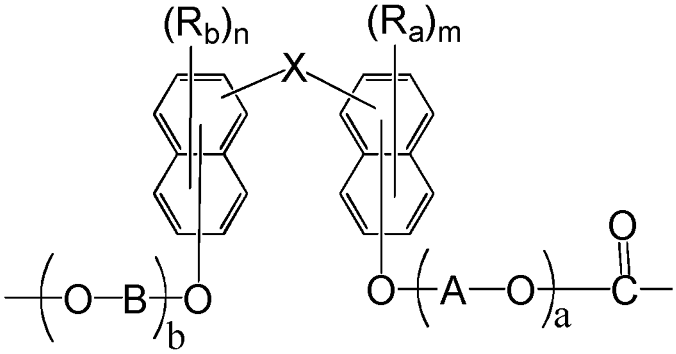

(2)

(In General formula (2), $R_a$ and $R_b$ are each independently selected from the group consisting of a hydrogen atom, a halogen atom, a C1-C20 alkyl group, a C1-C20 alkoxyl group, a C5-C20 cycloalkyl group, a C5-C20 cycloalkoxyl group, a C6-C20 aryl group, a C6-C20 heteroaryl group or a C6-C20 aryloxy group containing one or more heteroatoms selected from O, N and S, and -C≡C-$R_h$,

$R_h$ represents a C6-C20 aryl group or a C6-C20 heteroaryl group containing one or more heteroatoms selected from O, N and S,
X represents a single bond or a fluorene group,
A and B each independently represent a C1-C4 alkylene group, preferably a C2 alkylene group,
m and n each independently represent an integer from 0 to 6, preferably 0 to 2, and more preferably 0 or 1,
a and b each independently represent an integer from 1 to 10, preferably 0 to 3, and more preferably 1.

Preferably, $R_a$ and $R_b$ in General formula (2) each independently represent a hydrogen atom, a phenyl group, a naphthyl group, or a substituent selected from the group consisting of the following:

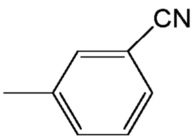
,
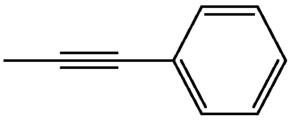
,
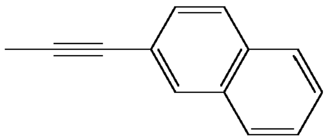
,
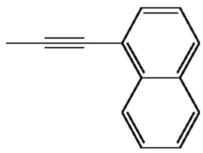
,

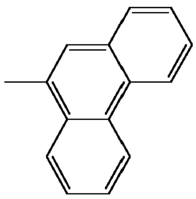
,
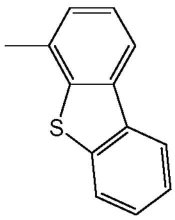
,
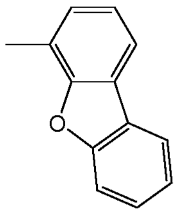
.

Examples of the above-mentioned naphthyl group include the followings:

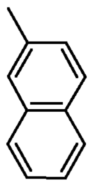
,
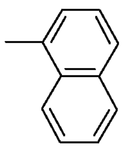
.

Preferably, $R_a$ and $R_b$ in General formula (2) each independently represent a hydrogen atom, a phenyl group, or

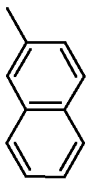
.

The structural unit (B) represented by General formula (2) preferably contains at least one of the structural units represented by General formulae (2a) and (2b) below.

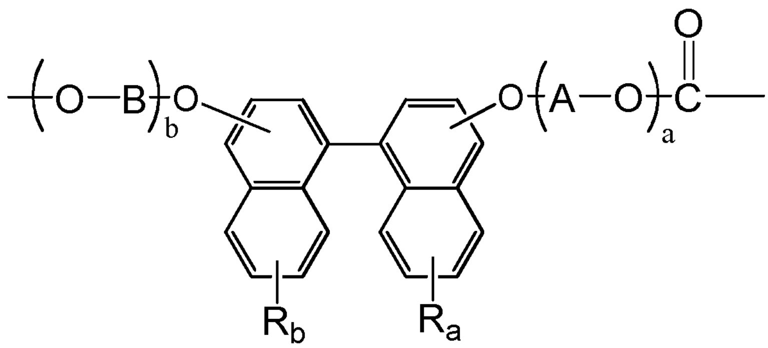

(2a)

In General formula (2a), $R_a$, $R_b$, A, B, a, and b are synonymous with those in General formula (2), respectively.

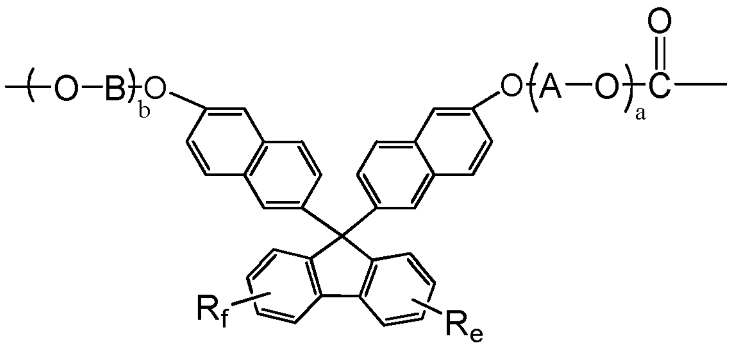

(2b)

In General formula (2b), A, B, a, and b are synonymous with those in General formula (2), respectively. $R_e$ and $R_f$ are each independently selected from the group consisting of a hydrogen atom, a C1-C20 alkyl group, a C1-C20 alkoxyl group, a C5-C20 cycloalkyl group, a C5-C20 cycloalkoxyl group, a C6-C20 aryl group, and a C6-C20 aryloxy group. More preferably, $R_e$ and $R_f$ each independently represent a hydrogen atom, a phenyl group, a naphthyl group, or a methyl group, and particularly preferably a hydrogen atom.

The mass ratio (A/B) of the structural unit (A) to the structural unit (B) in the resin composition of this embodiment is preferably 99/1 to 1/99, more preferably 95/5 to 5/95, and particularly preferably 90/10 to 10/90.

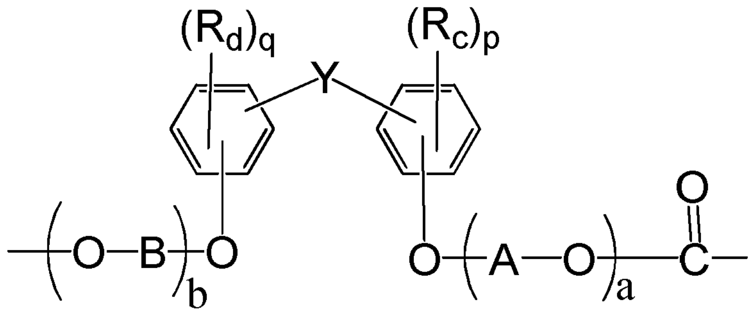

(3)

In general formula (3), $R_c$ and $R_d$ are each independently selected from the group consisting of a hydrogen atom, a halogen atom, a C1-C20 alkyl group, a C1-C20 alkoxyl group, a C5-C20 cycloalkyl group, a C5-C20 cycloalkoxyl group, and a C6-C20 aryl group, and preferably a hydrogen atom, a methyl group, or a phenyl group,

Y represents a fluorene group,

A and B each independently represent a C1-C4 alkylene group, preferably a C2 alkylene group,

p and q each independently represent an integer from 0 to 4, preferably an integer from 0 to 2, and more preferably 0 or 1, and

a and b each independently represent an integer from 1 to 10, preferably 0 to 3, more preferably 1.

The structural unit (C) represented by General formula (3) preferably contains a structural unit represented by General formula (3a) below.

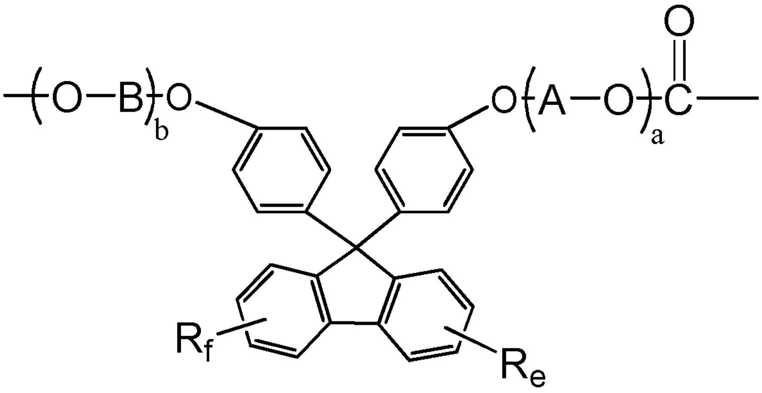

(3a)

In General formula (3a), A, B, a, and b are synonymous with those in General formula (3), respectively. $R_e$ and $R_f$ are each independently selected from the group consisting of a hydrogen atom, a C1-C20 alkyl group, a C1-C20 alkoxyl group, a C5-C20 cycloalkyl group, a C5-C20 cycloalkoxyl group, a C6-C20 aryl group, and a C6-C20 aryloxy group. More preferably, $R_e$ and $R_f$ each independently represent a hydrogen atom, a phenyl group, a naphthyl group, or a methyl group, and particularly preferably a hydrogen atom.

The mass ratio (A/C) of the structural unit (A) to the structural unit (C) in the resin composition of this embodiment is preferably 99/1 to 1/99, more preferably 95/5 to 30/70, and particularly preferably 95/5 to 50/50.

The polycarbonate resin used in the present invention contains at least one of the structural units (B) and (C), and preferably consists substantially of either one of structural units (B) and (C). For example, preferably 90% or more, more preferably 95% or more, and still more preferably 98% or more of the structural units of the polycarbonate resin used in the present invention consists of the structural unit (B) or (C).

If the polycarbonate resin used in the present invention contains both of the structural units (B) and (C), there is no restriction on how these structural units are contained in the resin. In one aspect of the present invention, the polycarbonate resin may contain a copolymer containing the structural units (B) and (C), or it may be a resin of a binary blend of homopolymers composed of the respective structural units.

The polycarbonate resin used in the present invention may include any of random, block, and alternating copolymer structures.

The weight average molecular weight (Mw) of the polycarbonate resin used in this invention is preferably 10,000 to 100,000. Herein, a "weight average molecular weight (Mw)" refers to a "polystyrene-equivalent weight average molecular weight (Mw)".

More preferably, the polystyrene-equivalent weight average molecular weight (Mw) is 10,000 to 50,000, more preferably 15,000 to 45,000, and still more preferably 20,000 to 40,000.

If Mw is smaller than 10,000, the molded body becomes brittle, which is undesirable. If Mw is greater than 100,000, the melt viscosity becomes higher, making it difficult to remove the resin after production, and also the flowability becomes poor, making injection molding in a molten state difficult, which are undesirable.

The refractive index (nd) of the polycarbonate resin used in the present invention at a temperature of 23°C and a wavelength of 587.6 nm is preferably 1.635 to 1.695, more preferably 1.640 to 1.690, still more preferably 1.645 to 1.685, and particularly preferably 1.660 to 1.685. The polycarbonate resin used in the present invention has a high refractive index (nd), which is suitable as an optical lens material. The refractive index can be determined by the method described in the example below.

The Abbe number (νd) of the polycarbonate resin used in the present invention is preferably 70 or less, more preferably 30 or less, still more preferably 24 or less, yet still more preferably 22 or less, and particularly preferably 20 or less. The lower limit of the Abbe number is about 14, 16, 17, or 18. The Abbe number can be determined by the method described in the example below.

Various additives such as an antioxidant, a mold release agent, a UV absorber, a colorant, a light stabilizer, a lubricant, a plasticizer, a flow modifier, a thickening agent, a flame retardant, a crystal nucleating agent, a compatibility agent, a strengthening agent, a bulking agent, a dye, an antistatic agent, an antibacterial agent, a matting agent, a drying control agent, an anti-settling agent, a surfactant, a drying oil, a wax, a filler, a reinforcing agent, a surface smoother, a leveling agent, a polymerization metal deactivator, and a curing accelerator, and a molding auxiliary agent, etc. can favorably be added to the polycarbonate resin of the present invention to an extent that does not impair the purpose of this embodiment.

The UV absorber is preferably at least one kind of UV absorber selected from the group consisting of a benzotriazole-based UV absorber, a benzophenone-based UV absorber, a triazine-based UV absorber, a cyclic imino ester-based UV absorber, and a cyanoacrylate-based UV absorber. Specifically, any of the UV absorbers listed below may be used alone or in combination of two or more kinds.

Examples of the benzotriazole-based UV absorber include 2-(2-hydroxy-5-methylphenyl)benzotriazole, 2-(2-hydroxy-5-tert-octylphenyl)benzotriazole, 2-(2-hydroxy-3,5-dicumylphenyl)phenylbenzotriazole, 2-(2-hydroxy-3-tert-butyl-5-methylphenyl)-5-chlorobenzotriazole, 2,2'-methylenebis[4-(1,1,3,3-tetramethylbutyl)-6-(2N-benzotriazol-2-yl)phenol], 2-(2-hydroxy-3,5-di-tert-butylphenyl)benzotriazole, 2-(2-hydroxy-3,5-di-tert-butylphenyl)-5-chlorobenzotriazole, 2-(2-hydroxy-3,5-di-tert-amylphenyl)benzotriazole, 2-(2-hydroxy-5-tert-octylphenyl)benzotriazole, 2-(2-hydroxy-5-tert-butylphenyl)benzotriazole, 2-(2-hydroxy-4-octoxyphenyl)benzotriazole, 2,2'-methylenebis(4-cumyl-6-benzotriazolphenyl), 2,2'-p-phenylenebis(1,3-benzoxazine-4-one), and 2-[2-hydroxy-3-(3,4,5,6-tetrahydrophthalimidomethyl)-5-methylphenyl]benzotriazole.

Examples of the benzophenone-based UV absorber include 2,4-dihydroxybenzophenone, 2-hydroxy-4-methoxybenzophenone, 2-hydroxy-4-octoxybenzophenone, 2-hydroxy-4-benzyloxybenzophenone, 2-hydroxy-4-methoxy-5-sulfoxybenzophenone, 2-hydroxy-4-methoxy-5-sulfoxy trihydridrate benzophenone, 2,2'-dihydroxy-4-methoxybenzophenone, 2,2',4,4'-tetrahydroxybenzophenone, 2,2'-dihydroxy-4,4'-dimethoxybenzophenone, 2,2'-dihydroxy-4,4'-dimethoxy-5-sodium sulfoxybenzophenone, bis(5-benzoyl-4-hydroxy-2-methoxyphenyl)methane, 2-hydroxy-4-n-dodecyloxybenzophenone, and 2-hydroxy-4-methoxy-2'-carboxybenzophenone.

Examples of the triazine-based UV absorber include 2-(4,6-diphenyl-1,3,5-triazine-2-yl)-5-[(hexyl)oxy]-phenol and 2-(4,6-bis(2,4-dimethylphenyl)-1,3,5-triazine-2-yl)-5-[(octyl)oxy]-phenol.

Examples of the cyclic imino ester-based UV absorber include 2,2'-bis(3,1-benzoxazine-4-one), 2,2'-p-phenylenebis(3,1-benzoxazine-4-one), 2,2'-m-phenylenebis(3,1-benzoxazine-4-one), 2,2'-(4,4'-diphenylene)bis(3,1-benzoxazine-4-one), 2,2'-(2,6-naphthalene)bis(3,1-benzoxazine-4-one), 2,2'-(1,5-naphthalene)bis(3,1-benzoxazine-4-one), 2,2'-(2-methyl-p-phenylene)bis(3,1-benzoxazine-4-one), 2,2'-(2-nitro-p-phenylene)bis(3,1-benzoxazine-4-one), and 2,2'-(2-chloro-p-phenylene)bis(3,1-benzoxazine-4-one).

Examples of the cyanoacrylate-based UV absorber include 1,3-bis-[(2'-cyano-3',3'-diphenylacryloyl)oxy]-2,2-bis[(2-cyano-3,3-diphenylacryloyl)oxy] methyl]propane, and 1,3-bis-[(2-cyano-3,3-diphenylacryloyl)oxy]benzene.

The content of the UV absorber is preferably 0.01 to 3.0 parts by mass, more preferably 0.02 to 1.0 parts by mass, and still more preferably 0.05 to 0.8 parts by mass relative to 100 parts by mass of the polycarbonate resin. As long as the content is within the above range, sufficient weather resistance can be imparted to the polycarbonate resin in accordance with the use.

Examples of the bluing agents include: Solvent violet 13 (generic name) [CA. No. (Color Index No.) 60725; trade names "Macrolex Violet B" manufactured by Lanxess, "Diaresin Blue G" manufactured by Mitsubishi Chemical Corporation, and "Sumiplast Violet B" manufactured by Sumitomo Chemical Industry Company], Solvent violet 14, Solvent violet 31 (generic name) [CA. No. 68210; trade name "Diaresin Violet D" manufactured by Mitsubishi Chemical Corporation], Solvent violet 33 [CA. No. 60725; trade name "Diaresin Blue J" manufactured by Mitsubishi Chemical Corporation], Solvent violet 36 [CA. No. 68210; trade name "Macrolex Violet 3R" manufactured by Lanxess], Solvent blue 45 [CA. No. 61110; trade name "Tetrazole Blue RLS" manufactured by Sandoz AG], Solvent violet 94 (generic name) [CA. No. 61500; trade name "Diaresin Blue N" manufactured by Mitsubishi Chemical Corporation]. Solvent blue 97 (generic name) ["Macrolex Blue RR" manufactured by Lanxess], Solvent blue 45 (generic name), Solvent blue 87 (generic name), and Disperse violet 28 (generic name). The bluing agent is added to erase the yellowness of an optical lens and may be used alone or in combination of two or more kinds. The amount of the bluing agent added is preferably 0.00001 to 0.005 parts by mass, more preferably 0.00001 to 0.0005 parts by mass, and still more preferably 0.00001 to 0.0002 parts by mass relative to 100 parts by mass of the polycarbonate resin.

[Method for producing resin containing structural unit (b) and/or structural unit (c)]

A polycarbonate resin containing the structural unit (B) used in the present invention can favorably be produced by using at least one of compounds represented by General formulae (2a') and (2b') below as a dihydroxy component and allowing it to react with a carbonate precursor such as a carbonate diester. Specifically, the resin can be produced by reacting the above dihydroxy component with a carbonate precursor such as a carbonate diester by melt polycondensation in the presence of a basic compound catalyst, a transesterification catalyst, or a mixed catalyst composed of both, or in the absence of a catalyst.

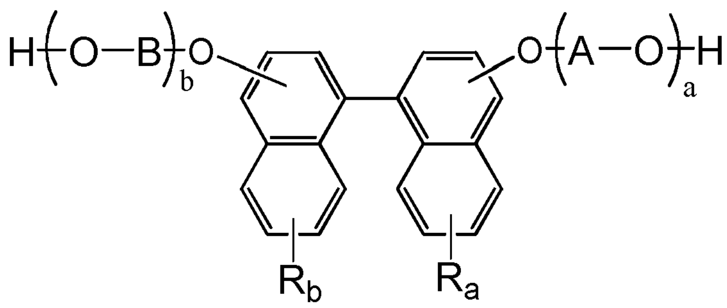

(2a')

In General formula (2a'), $R_a$, $R_b$, A, B, a, and b are synonymous with those in General formula (2a), respectively.

Examples of the dihydroxy compound represented by General formula (2a') include 2,2'-bis(1-hydroxymethoxy)-1,1'-binaphthalene, 2,2'-bis(2-hydroxyethoxy)-1,1'-binaphthalene, 2,2'-bis(3-hydroxypropyloxy)-1,1'-binaphthalene, and 2,2'-bis(4-hydroxybutoxy)-1,1'-binaphthalene. Among them, 2,2'-bis(2-hydroxyethoxy)-1,1'-binaphthalene (hereinafter, sometimes abbreviated as "BNE") is preferable. These compounds can be used alone or in combination of two or more kinds.

A compound represented by General formula (2a'), wherein a and b are not identical (i.e., $a \neq b$), is preferably contained in a total amount of 50 ppm or less and more preferably 20 ppm or less in the monomer mainly composed of compounds represented by General formula (2a').

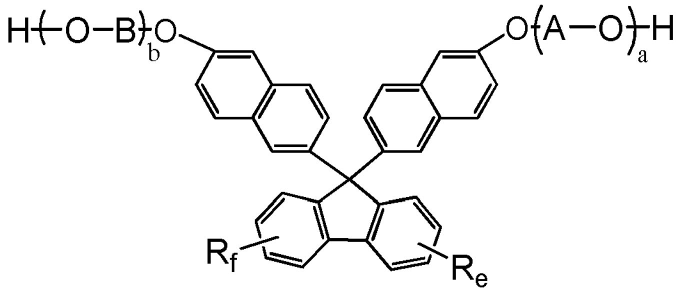

(2b')

In general formula (2b'), $R_e$, $R_f$, A, B, a and b are synonymous with those in general formula (2b), respectively.

The compound represented by General formula (2b') may be, for example, a 9,9-bis(hydroxy(poly)alkoxynaphthyl)fluorene. Specifically, examples of the compound represented by General formula (2b') include 9,9-bis[6-(1-hydroxymethoxy)naphthalene-2-yl]fluorene, 9,9-bis[6-(2-hydroxyethoxy)naphthalene-2-yl]fluorene, 9,9-bis[6-(3-hydroxypropoxy)naphthalene-2-yl]fluorene, and 9,9-bis[6-(4-hydroxybutoxy)naphthalene-2-yl]fluorene. Among them, 9,9-bis[6-(2-hydroxyethoxy)naphthalene-2-yl]fluorene is preferable. These compounds can be used alone or in combination of two or more kinds.

When a compound represented by General formula (2b') is produced, it may contain fluorenone, one of the raw materials, as an impurity. The content of fluorenone is preferably 1,000 ppm or less, more preferably 100 ppm or less, still more preferably 50 ppm or less, and particularly preferably 10 ppm or less in the monomer mainly composed of the compound represented by General formula (2b'). Fluorenone contained in the monomer mainly composed of the compound represented by General formula (2b') may remain in the resin after polymerization. The lower the fluorenone content, the better the hue of the resin, and thus favorable. Although a compound represented by General formula (2b'), wherein a and b are not identical (i.e., $a \neq b$), is not an impurity, it is preferably contained in a total amount of 50 ppm or less and more preferably 20 ppm or less in the monomer mainly composed of compounds represented by General formula (2b').

The compound represented by General formula (2b') can be produced by various synthetic methods. For example, as described in Japanese Patent No. 5442800, (a) a method in which a fluorenone is allowed to react with a hydroxynaphthalene in the presence of hydrogen chloride gas and mercaptocarboxylic acid; (b) a method in which 9-fluorenone is allowed to react with a hydroxynaphthalene in the presence of an acid catalyst (and alkyl mercaptan); (c) a method in which a fluorenone is allowed to react with a hydroxynaphthalene in the presence of hydrochloric acid and a thiol (such as mercaptocarboxylic acid); (d) a method in which a fluorenone is allowed to react with a hydroxynaphthalene in the presence of sulfuric acid and a thiol (such as mercaptocarboxylic acid) and the resultant is crystalized using a crystallizing solvent composed of a hydrocarbon and a polar solvent to produce a bisnaphthol fluorene; or other method, can be employed to obtain a 9,9-bis(hydroxynaphthyl)fluorene, which is then allowed to react with compounds corresponding to [AO]a and [BO]b groups (such as alkylene oxide and haloalkanol), thereby producing the compound. For example, 9,9-bis[6-(2-hydroxyethoxy)naphthyl]fluorene may be obtained by allowing a 9,9-bis[6-hydroxynaphthyl]fluorene to react with 2-chloroethanol under alkaline conditions.

A polycarbonate resin containing the structural unit (C) used in the present invention can favorably be produced by using a compound represented by General formula (3a') below as a dihydroxy component and allowing it to react with a carbonate precursor such as carbonate diester. Specifically, the resin can be produced by reacting the above dihydroxy component with a carbonate precursor such as carbonate diester by melt polycondensation in the presence of a basic compound catalyst, a transesterification catalyst, or a mixed catalyst composed of both, or in the absence of a catalyst.

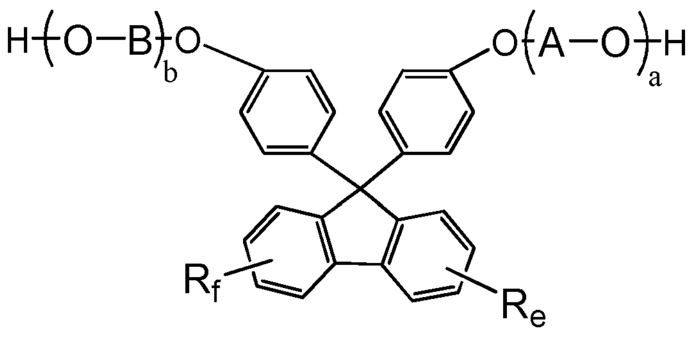

(3a')

In general formula (3a'), $R_e$, $R_f$, A, B, a and b are synonymous with those in general formula (3a), respectively.

Examples of the dihydroxy compound represented by General formula (3a') include 9,9-bis[4-(2-hydroxyethoxy)phenyl]fluorene, 9,9-bis[4-(2-hydroxyethoxy)-3-methylphenyl]fluorene, 9,9-bis[4-(2-hydroxyethoxy)-3-tert-butylphenyl]fluorene, 9,9-bis[4-(2-hydroxyethoxy)-3-isopropylphenyl]fluorene, 9,9-bis[4-(2-hydroxyethoxy)-3-cyclohexylphenyl]fluorene, and 9,9-bis[4-(2-hydroxyethoxy)-3-phenylphenyl]fluorene (hereinafter, sometimes abbreviated as "BPPEF"). Among these compounds, 9,9-bis[4-(2-hydroxyethoxy)phenyl]fluorene and 9,9-bis[4-(2-hydroxyethoxy)-3-phenylphenyl]fluorene are preferable, and 9,9-bis[4-(2-hydroxyethoxy)-3-phenylphenyl]fluorene (BPPEF) is more preferable. These compounds can be used alone or in combination of two or more kinds.

A compound represented by General formula (3a'), wherein a and b are not identical (i.e., $a \neq b$), is preferably contained in an amount of 50 ppm or less and more preferably 20 ppm or less in the monomer mainly composed of compounds represented by General formula (3a').

Other than the above-described compound, examples of an aromatic dihydroxy compound that can be used in combination include bisphenol A, bisphenol AP, bisphenol AF, bisphenol B, bisphenol BP, bisphenol C, bisphenol E, bisphenol F, bisphenol G, bisphenol M, bisphenol S, bisphenol P, bisphenol PH, bisphenol TMC, and bisphenol Z.

Examples of a carbonate diester used in this invention include diphenyl carbonate, ditoryl carbonate, bis(chlorophenyl) carbonate, m-cresyl carbonate, dimethyl carbonate, diethyl carbonate, dibutyl carbonate, and dicyclohexyl carbonate. Among these carbonate diesters, diphenyl carbonate is particularly favorable. Diphenyl carbonate is preferably used in a ratio of 0.97 to 1.20 moles, more preferably in a ratio of 0.98 to 1.10 moles, and still more preferably in a ratio of 1.00 to 1.10 moles per mole of the total dihydroxy compound.

Examples of the basic compound catalysts among the transesterification catalysts particularly include alkali metal compounds, alkaline earth metal compounds, and nitrogen-containing compounds.

Examples of the alkali metal compound used in this invention include organic acid salts, inorganic salts, oxides, hydroxides, hydrides or alkoxides of alkali metals. Specifically, sodium hydroxide, potassium hydroxide, cesium hydroxide, lithium hydroxide, sodium bicarbonate, sodium carbonate, potassium carbonate, cesium carbonate, lithium carbonate, sodium acetate, potassium acetate, cesium acetate, lithium acetate, sodium stearate, potassium stearate, cesium stearate, lithium stearate, sodium borohydride, sodium phenylborate, sodium benzoate, potassium benzoate, cesium benzoate, lithium benzoate, disodium hydrogen phosphate, dipotassium hydrogen phosphate, dilithium hydrogen phosphate, disodium phenyl phosphate, disodium salt, dipotassium salt, dicesium salt or dilithium salt of bisphenol A, sodium salt, potassium salt, cesium salt or lithium salt of phenol, or the like can be used.

Examples of the alkaline earth metal compound include, organic acid salts, inorganic salts, oxides, hydroxides, hydrides or alkoxides of alkaline earth metal compounds. Specifically, magnesium hydroxide, calcium hydroxide, strontium hydroxide, barium hydroxide, magnesium bicarbonate, calcium bicarbonate, strontium bicarbonate, barium bicarbonate, magnesium carbonate, calcium carbonate, strontium carbonate, magnesium acetate, calcium acetate, strontium acetate, barium acetate, magnesium stearate, calcium stearate, calcium benzoate, magnesium phenyl phosphate, or the like can be used.

Examples of the nitrogen-containing compound include quaternary ammonium hydroxides, and salts and

amines thereof. Specifically, a quaternary ammonium hydroxide having an alkyl group, an aryl group, or the like such as tetramethylammonium hydroxide, tetraethylammonium hydroxide, tetrapropylammonium hydroxide, tetrabutylammonium hydroxide, or trimethylbenzylammonium hydroxide; a tertiary amine such as triethylamine, dimethylbenzylamine, or triphenylamine; a secondary amine such as diethylamine or dibutylamine; a primary amine such as propylamine or butylamine; an imidazole such as 2-methylimidazole, 2-phenylimidazole, or benzoimidazole; a base or a basic salt such as ammonia, tetramethylammonium borohydride, tetrabutylammonium borohydride, tetrabutylammonium tetraphenylborate, or tetraphenylammonium tetraphenylborate; or the like can be used.

Salts of zinc, tin, zirconium, lead or the like can favorably be used alone or in combination as the transesterification catalyst.

Specifically, zinc acetate, zinc benzoate, zinc 2-ethylhexanoate, tin(II) chloride, tin(IV) chloride, tin(II) acetate, tin(IV) acetate, dibutyl tin dilaurate, dibutyl tin oxide, dibutyl tin dimethoxide, zirconium acetylacetonate, zirconium oxyacetate, zirconium tetrabutoxide, lead(II) acetate, lead(IV) acetate, or the like can be used as the transesterification catalyst.

These catalysts are used in a ratio of $1 \times 10^{-9}$ to $1 \times 10^{-3}$ moles, preferably $1 \times 10^{-7}$ to $1 \times 10^{-4}$ moles, per mole of the total dihydroxy compound.

The melt polycondensation process is carried out by performing melt polycondensation using the aforementioned raw materials and catalyst under heating and also under normal or reduced pressure while removing by-products by transesterification reaction.

Melt polycondensation using this composition system is desirably performed by allowing the dihydroxy component and the carbonate diester described above to melt in a reaction vessel, and then to react while retaining the by-product, i.e., a monohydroxy compound. In order to retain the by-product, the pressure can be controlled by closing the reactor, reducing the pressure, applying pressure, or the like. The reaction time for this process is 20 to 240 minutes, preferably 40 to 180 minutes, and particularly preferably 60 to 150 minutes. If the by-produced monohydroxy compound is distilled away immediately after the generation, the content of the high molecular weight polymer in the resulting polycarbonate resin will be low. However, if the by-produced monohydroxy compound is retained in the reaction vessel for a certain time, the content of the high molecular weight polymer in the resulting polycarbonate resin will be high.

The melt polycondensation reaction may be performed continuously or in batch mode. The reactor used for the reaction may be a vertical reactor equipped with an anchor impeller, a Maxblend impeller, a helical ribbon impeller, etc., a horizontal reactor equipped with a paddle impeller, a lattice impeller, a spectacle-shaped impeller, etc., or an extruder equipped with a screw. It is also suitable to use an appropriate combination of these reactors considering the viscosity of the polymerized product.

In a method for producing a polycarbonate resin used in the present invention, the catalyst may be removed or deactivated after the polymerization reaction is completed so as to maintain thermal and hydrolytic stability. A process of adding a known acidic substance can be suitably employed to deactivate the catalyst. Specifically, the acidic substance used may suitably be: an ester such as butyl benzoate; an aromatic sulfonic acid such as p-toluenesulfonic acid; an aromatic sulfonic ester such as butyl p-toluenesulfonate or hexyl p-toluenesulfonate; a phosphoric acid such as phosphorous acid, phosphoric acid or phosphonic acid; a phosphite ester such as triphenyl phosphite, monophenyl phosphite, diphenyl phosphite, diethyl phosphite, di-n-propyl phosphite, di-n-butyl phosphite, di-n-hexyl phosphite, dioctyl phosphite, or monooctyl phosphite; a phosphate ester such as triphenyl phosphate, diphenyl phosphate, monophenyl phosphate, dibutyl phosphate, dioctyl phosphate, or monooctyl phosphate; a phosphonic acid such as diphenyl phosphonate, dioctyl phosphonate, or dibutyl phosphonate; a phosphonate ester such as diethyl phenyl phosphonate; a phosphine such as triphenyl phosphine, or bis(diphenyl phosphino)ethane; a boric acid such as boric acid or phenylboric acid; an aromatic sulfonate such as dodecylbenzenesulfonate tetrabutylphosphonium salt; an organic halide such as stearoyl chloride, benzoyl chloride, or p-toluenesulfonate chloride; an alkyl sulfate such as dimethyl sulfate; an organic halide such as benzyl chloride; or the like. These deactivating agents are used at 0.01 to 50 times, preferably at 0.3 to 20 times, the molar amount of the catalyst. If the amount is less than 0.01 times the molar amount of the catalyst, the deactivation effect will be inadequate and undesirable. On the other hand, if the amount is greater than 50 times the molar amount of the catalyst, the heat resistance of the resin will decrease and the molded body will easily become colored, which are undesirable.

After deactivation of the catalyst, a degassing process may be employed to remove low-boiling compounds from the polymer at a pressure of 0.1 to 1 mmHg and a temperature of 200 to 350°C. For this process, a horizontal reactor equipped with an impeller with excellent surface renewal capability, such as a paddle impeller, a lattice impeller, or a spectacle impeller, or a thin film evaporator can suitably be used.

Since the polycarbonate resin used in the present invention should contain as little foreign matter as possible, filtration of the molten raw material, filtration of the catalyst solution, and the like are suitably performed. The mesh size of the filter is preferably 5 μm or smaller, and more preferably 1 μm or smaller. In addition, the resulting resin is suitably filtered through a polymer filter. The mesh size of the polymer filter is preferably 100 μm or smaller, and more preferably 30 μm or smaller. The process for collecting the resin pellets should obviously be in a low dust environment, preferably

a class 6 or lower environment, and more preferably a class 5 or lower environment.

After preparing the polycarbonate resin containing the structural unit (B) and/or structural unit (C), it is preferable to add an additive such as an antioxidant to the polycarbonate resin. The method of addition is not particularly limited and may be done by any method. For example, the additive may be added later to the vessel containing the polycarbonate resin, or the polycarbonate resin may be added later to the vessel in which the additive has been placed beforehand, or the polycarbonate resin and the additive may be placed simultaneously in a vessel. Specifically, a tumble mixer, a Henschel mixer, a ribbon blender, a super mixer, a roll mixer, or a tumbler mixer may be used to attach the additive to the polycarbonate resin in pellet form. Such a method of addition is preferred because it allows the additive to be dispersed uniformly in the resin composition containing the polycarbonate resin and minimizes the thermal history. The polycarbonate resin in pellet form may be mixed with other pellets which have a high concentration of additive melt-kneaded into a portion of the polycarbonate resin.

After the additive is added to the polycarbonate resin, the resultant is preferably melt-kneaded. The method of melt kneading is not particularly limited and any method can be employed. For example, melt kneading may be performed using a single- or twin-screw extruder, a Banbury mixer, a static mixer, or by other known kneading methods. The polycarbonate resin may be pelletized prior to addition of the additive. The pelletization process is not limited and any method can be used. The obtained melt-kneaded polycarbonate resin may be pelletized, and here again any pelletization process may be used.

[Resin containing structural unit (D)]

Preferably, the resin composition of this embodiment further contains a resin containing a structural unit (D) represented by General formula (4) below.

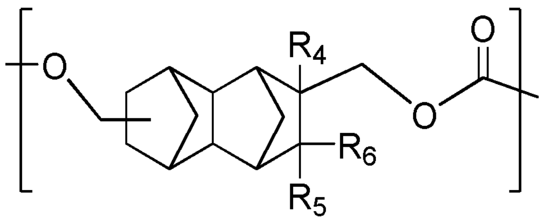

(4)

In General formula (4), $R_4$ represents a hydrogen atom, a methyl group or an ethyl group, and $R_5$ and $R_6$ each independently represent a hydrogen atom or a methyl group. Preferably, all of $R_4$, $R_5$ and $R_6$ represent hydrogen atoms.

The resin containing the structural unit (D) is preferably a polyester carbonate resin or a polycarbonate resin, and particularly preferably a polycarbonate resin.

The mass ratio (A/D) of the structural unit (A) to the structural unit (D) in the resin composition of this embodiment is preferably 99/1 to 1/99, more preferably 90/10 to 50/50, and particularly preferably 80/20 to 60/40.

The resin composition of this embodiment can be used in combination with a resin other than the resin containing the structural unit (A), the resin containing the structural unit (B) and/or the structural unit (C), and the resin containing the structural unit (D) to the extent that does not impair the desired effect of this embodiment. Examples of such a resin include, but are not particularly limited to, at least one resin selected from the group consisting of a polyester resin other than the polyester resin of this embodiment, a polycarbonate resin other than the polycarbonate resin of this embodiment, a (meth)acrylic resin, a polyamide resin, a polystyrene resin, a cyclo-olefin resin, an acrylonitrile-butadiene-styrene copolymer resin, a polyvinyl chloride resin, a polyphenylene ether resin, a polysulfone resin, a polyacetal resin, and a methyl methacrylate-styrene copolymer resin. These resins can be of various known kinds and can be added alone or in combination of two or more kinds to the resin composition.

Various additives such as an antioxidant, a mold release agent, a UV absorber, a colorant, a light stabilizer, a lubricant, a plasticizer, a flow modifier, a thickening agent, a flame retardant, a crystal nucleating agent, a compatibility agent, a strengthening agent, a bulking agent, a dye, an antistatic agent, an antibacterial agent, a matting agent, a drying control agent, an anti-settling agent, a surfactant, a drying oil, a wax, a filler, a reinforcing agent, a surface smoother, a leveling agent, a polymerization metal deactivator, and a curing accelerator, and a molding auxiliary agent, etc. can favorably be added to the resin composition of this embodiment to an extent that does not impair the desired effect of this embodiment.

[Antioxidant]

The resin composition of this embodiment preferably contains an antioxidant from the viewpoint of preventing

degradation of the resin during molding and preventing mold staining for stable molding. The antioxidant is contained in an amount of preferably 0.001 to 0.50 parts by mass, more preferably 0.01 to 0.40 parts by mass, and particularly preferably 0.05 to 0.30 parts by mass in the resin composition. The antioxidant can be used in an amount of 0.001 parts by mass or more so that the effect of improving thermal stability can be achieved, and in an amount of 0.50 parts by mass or less so that the decrease in refractive index and Tg due to too much antioxidant can be suppressed.

As the antioxidant, one kind of antioxidant may be used alone or several kinds of antioxidants may be used in combination. If a plurality of kinds of antioxidants are used, the total amount of antioxidants should be adjusted to lie in the above numerical range.

While examples of the antioxidant used for the present invention include phosphite antioxidants, phenolic antioxidants, sulfur antioxidants, epoxy antioxidants, and hindered amine antioxidants, it is particularly preferable to use a phosphite antioxidant or a phenolic antioxidant, and more preferable to use a phosphite antioxidant and a phenolic antioxidant in combination. Examples of the phosphite antioxidant include, but are not limited to, tricresyl phosphite, tris(2-ethylhexyl)phosphite, tridecyl phosphite, trilauryl phosphite, tris(tridecyl)phosphite, and trioleoyl phosphite, as well as ADK STAB PEP-8, ADK STAB PEP-36, ADK STAB HP-10, ADK STAB 2112, ADK STAB 2112RG, ADK STAB 1178, ADK STAB 1500, ADK STAB C, ADK STAB 135A, ADK STAB 3010, and ADK STAB TPP manufactured by ADEKA Corporation. Here, ADK STAB PEP36 (manufactured by ADEKA Corporation), ADK STAB 1500 (manufactured by ADEKA Corporation), and ADK STAB 2112 (manufactured by ADEKA Corporation) have the following structures, respectively.

ADK STAB PEP36

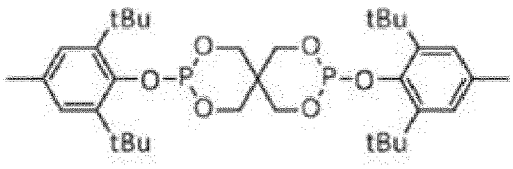

ADK STAB 1500

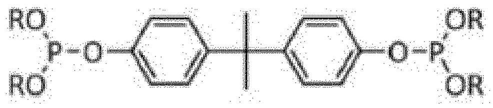

R : $C_{12}$ - $C_{15}$ Alkyl kyl

ADK STAB 2112

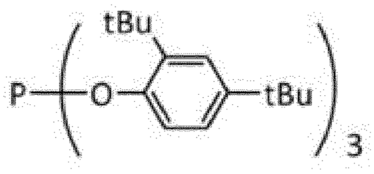

Examples of a favorable phenolic antioxidant include a compound represented by the following general formula.

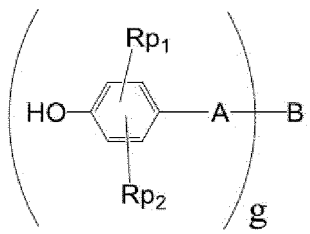

In this general formula, $R_{p1}$ and $R_{p2}$ are each independently a C1-C10 hydrocarbon group. A is a C1-C20 hydrocarbon group that may contain a functional group selected from an ester group, an ether group, and an amide group and/or a phosphorus atom. B is a C1-C6 hydrocarbon group that may contain an oxygen atom and/or a nitrogen atom, a sulfur atom, or a single bond. g represents an integer from 1 to 4. Specifically, examples of the phenolic antioxidant include, but are not limited to, 1,6-hexanediol-bis[3-(3,5-di-tert-butyl-4-hydroxyphenyl)propionate], 2,2-thio-diethylenebis[3-(3,5-di-tert-butyl-4-hydroxyphenyl)propionate], tris(3,5-di-tert-butyl-4-hydroxybenzyl)-isocyanurate, and N,N'-hexamethylenebis(3,5-di-tert-butyl-4-hydroxy-hydrocinnamide), as well as ADK STAB AO-20, ADK STAB AO-30, ADK STAB

AO-50, ADK STAB AO-50F, ADK STAB AO-60, ADK STAB ASO-60GAO-80G, and ADK STAB AO-330 manufactured by ADEKA Corporation. Here, ADK STAB AO60 (manufactured by ADEKA Corporation), ADK STAB AO80 (manufactured by ADEKA Corporation), and ADK STAB AO50 (manufactured by ADEKA Corporation) have the following structures, respectively.

ADK STAB AO60

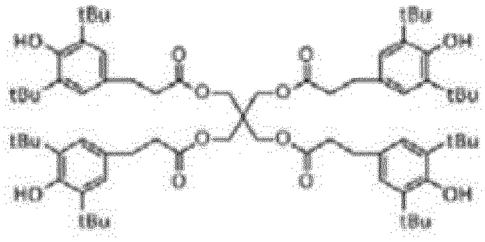

ADK STAB AO80

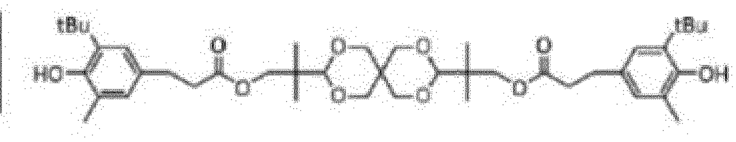

ADK STAB AO50

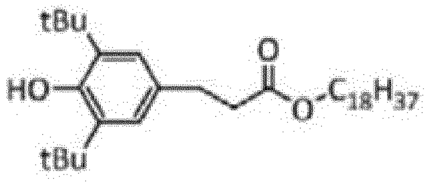

[Mold release agent]

The resin composition of this embodiment preferably contain a mold release agent from the viewpoint of reducing friction between the resin composition and the molding machine during the molding process and thereby preventing a decrease in the molecular weight and coloration of the resin. The mold release agent is contained in an amount of preferably 0.001 to 0.50 mass%, more preferably 0.01 to 0.40 mass%, and particularly preferably 0.05 to 0.30 mass% in the resin composition.

Preferably, at least 90 mass% of the mold release agent consists of an ester of an alcohol and a fatty acid. Specifically, the ester of an alcohol and a fatty acid, may be, for example, an ester of a monohydric alcohol and a fatty acid, or a partial or total ester of a polyhydric alcohol and a fatty acid. The aforementioned ester of a monohydric alcohol and a fatty acid is preferably an ester of a monohydric alcohol having 1 to 20 carbon atoms and a saturated fatty acid having 10 to 30 carbon atoms. The partial or total ester of a polyhydric alcohol and a fatty acid is preferably a partial or total ester of a polyhydric alcohol having 1 to 25 carbon atom and a saturated fatty acid having 10 to 30 carbon atoms.

Specifically, examples of the ester of a monohydric alcohol and a saturated fatty acid include stearyl stearate, palmityl palmitate, butyl stearate, methyl laurate, and isopropyl palmitate. Examples of the partial or total ester of a polyhydric alcohol and a saturated fatty acid include total or partial esters of glycerol monostearate, glycerol monostearate, glycerol distearate, glycerol tristearate, sorbitan monostearate, glycerol monobehenate, glycerol monocaprylate, glycerol monolaurate, pentaerythritol monostearate, pentaerythritol tetrastearate, pentaerythritol tetrapelargonate, propylene glycol monostearate, biphenyl biphenate, sorbitan monostearate, 2-ethylhexyl stearate, and dipentaerythritols such as dipentaerythritol hexastearate. Among these esters, stearyl stearate, glycerol monostearate, glycerol distearate, or glycerol tristearate is preferred.

[Optical lens]

An optical lens manufactured using the resin composition of the present invention will have a high refractive index, low Abbe number, and high thermal stability, and thus is extremely useful for use in telescopes, binoculars, television projectors, and other fields that conventionally use expensive high refractive index glass lenses. The optical lens is suitably used in the form of an aspheric lens as necessary. Since spherical aberration can be reduced to virtually zero with a single aspherical lens, there is no need to remove spherical aberration by combining multiple spherical

lenses, which enables reduction of weight and production cost. Therefore, among other optical lenses, aspherical lenses are especially useful as camera lenses.

Optical lenses can be molded by any method such as injection molding, compression molding, or injection-compression molding. According to the present invention, an aspheric lens with a high refractive index and low birefringence, which is technically difficult to form using a glass lens, can be obtained more easily.

To avoid contamination of the optical lens with foreign matter as much as possible, the molding environment obviously needs to be a low dust environment, preferably a class 6 or lower environment, and more preferably a class 5 or lower environment.

[Optical film]

An optical film produced using the resin composition of the present invention has excellent transparency and thermal stability, and thus is suitable for use in LCD substrate films, optical memory cards, and other applications.

Examples of the molding method include, but are not limited to, compression molding, cast molding, roll processing, extrusion, and stretch molding, as well as injection molding.

In a case where the polycarbonate resin of the present invention is used in injection molding, the preferred glass transition temperature (Tg) is 90 to 180°C, more preferably 95 to 175°C, still more preferably 100 to 170°C, yet still more preferably 130 to 170°C, and particularly preferably 135 to 150°C. A Tg lower than 90°C is undesirable because it narrows the operating temperature range. On the other hand, a temperature exceeding 180°C is undesirable because the melting temperature of the resin becomes higher, which is more likely to cause decomposition and coloration of the resin. If the glass transition temperature of the resin is too high, the difference between the mold temperature and the resin glass transition temperature becomes too large for a general-purpose mold temperature controller. Therefore, use of a resin having too high glass transition temperature is difficult and undesirable in applications where products require strict surface accuracy. From the viewpoint of flowability upon molding and heat resistance upon molding, a lower limit of Tg is preferably 130°C, and more preferably 135°C, while an upper limit of Tg is preferably 160°C, and more preferably 150°C.

To avoid contamination of the optical film with foreign matter as much as possible, the molding environment obviously needs to be a low dust environment, preferably a class 6 or lower environment, and more preferably a class 5 or lower environment.

EXAMPLES

Hereinafter, the present invention will be described by way of examples, although the present invention should not be limited in any way to these examples. The measurements in the examples were made using the following methods and equipment.

<Evaluation methods for polyester resin, polycarbonate resin, and resin composition>

(1) Copolymer composition of polyester resin

$^{1}$H-NMR and $^{13}$C-NMR were measured to calculate the copolymer composition of the polyester resin from the peak area ratio derived from each structural unit. The measurement was performed using a nuclear magnetic resonance spectrometer (product name: AVANCE III 500/Ascend 500, manufactured by Bruker BioSpin Corporation) at 500 MHz. Deuterated chloroform was used as the solvent.

(2) Weight average molecular weight (Mw)

The weight average molecular weights of the resins and the resin composition were measured by gel permeation chromatography (GPC) and calculated in terms of standard polystyrene. The instrument, columns, and measurement conditions used were as follows.

- GPC instrument: HLC-8420GPC manufactured by Tosoh Corporation
- Columns: TSKgel SuperHM-M (× 3 columns) manufactured by Tosoh Corporation TSKgel guard column SuperH-H (× 1 column) manufactured by Tosoh Corporation
  TSKgel SuperH-RC (x 1 column) manufactured by Tosoh Corporation
- Detector: RI detector
- Standard polystyrenes: Standard polystyrene kit PStQuick C manufactured by Tosoh Corporation
- Sample solution: 0.2 Mass% tetrahydrofuran solution

- Eluent: Tetrahydrofuran
- Flow rate of eluent: 0.6 mL/min
- Column temperature: 40°C

(3) Glass transition temperature (Tg)

The glass transition temperatures of the resins and the resin composition were measured using a differential scanning calorimeter (product name: DSC-60/TA-60WS, manufactured by Shimadzu Corporation). 5-10 mg of the sample was placed in an unsealed aluminum container, and the temperature was increased to 280°C at a rate of 10°C/min in a stream of nitrogen gas (50 mL/min), followed by rapid cooling. The temperature was again increased under the same conditions, and the temperature at which the DSC curve changed by half the difference in the baseline before and after the transition (midpoint glass transition temperature) was used as the glass transition temperature.

(4) Refractive index (nd) and Abbe number (vd)

The refractive indices and Abbe numbers of the resins and the resin composition were measured by cutting out a measurement sample at right angle from the center of a 44 mm diameter, 3 mm thick disk-shaped molded body produced by the method described below. The sample was annealed in a dryer at 100°C for 12 hours and then subjected to measurement using a precision refractometer (KPR-200 manufactured by Kalnew Optical Industrial Co., Ltd.) The refractive indices were measured at a temperature of 23°C and wavelengths of 486.1 nm (F line), 587.6 nm (d line), and 656.3 nm (C line). The Abbe number was calculated from the refractive indices at these wavelengths using the following Formula (1).

$$\text{Formula (1) } vd = (nd-1)/(nF-nC)$$

(In Formula (1), vd is the Abbe number, nF is the refractive index at the wavelength of 486.1 nm, nd is the refractive index at the wavelength of 587.6 nm, and nC is the refractive index at the wavelength of 656.3 nm.)

(5) Preparation of disk-shaped molded body (diameter: 44 mm, thickness: 3 mm)

Injection molding was performed using an injection molding machine (J55AD manufactured by Japan Steel Works, Ltd.) at a cylinder temperature of 260-270°C and a mold temperature of 110-120°C to produce a disk-shaped molded body of the resin composition.

(6) Continuous formability

Injection molding was continuously performed using an injection molding machine (ROBOSHOT $\alpha$-S30iA manufactured by Fanuc Corporation) and a mold that can form eight aspherical lenses with an outer diameter of 4.7 mm and a center thickness of 0.26 mm, under the following conditions: cylinder temperature of 290°C, mold temperature of [Tg - 10°C], and molding cycle time of 25 to 40 sec/shot. If any of the lens part, sprue, or runner was damaged during molding, continuous molding was terminated at that point, where continuous moldability was evaluated based on the following criteria.

A: Continuous molding capacity of 30 shots or more
B: Continuous molding capacity of less than 30 shots, with a small degree of visual damage
B': Continuous molding capacity of less than 30 shots, with a large degree of visual damage

<Synthesis of polyester resin>

<Synthesis examples 1-4>

Raw monomers and manganese(II) acetate tetrahydrate in the quantities indicated in Table 1 below were supplied in a 30 L reactor equipped with a stirrer, a heater, a nitrogen inlet tube, a partial condenser, a total condenser, a cold trap, and a vacuum pump, and transesterification reaction was conducted in a nitrogen atmosphere by increasing the temperature to 235-245°C and by stirring. After the reaction conversion of the hydroxycarboxylic acid ester component and the diester component became 90% or higher as calculated from the amount of methanol distilled from the reactor, germanium(IV) oxide and phosphoric acid were added in the amounts indicated in Table 1 below, and the polycondensation reaction was conducted at 270-280°C and 133 Pa or lower by gradually increasing the temperature and reducing the pressure. Once the reaction solution was confirmed to have reached an appropriate melt viscosity, stirring was stopped, nitrogen was blown into the reactor to increase the pressure to 0.3 MPa, and the resulting polyester resin was collected while pelletizing. The evaluation results of the obtained polyester resins are shown in Table 1 below.

[Table 1]

| | | | Synthesis example 1 | Synthesis Example 2 | Synthesis Example 3 | Synthesis Example 4 |
|---|---|---|---|---|---|---|
| Polymerization of polyester resin | | | | | | |
| Monomer feed [kg] | Hydroxycarboxylic acid ester | D-NHEs | 17.28 | 14.60 | 13.30 | 14.85 |
| | Diester | DMCD | 0.94 | 1.84 | 2.28 | 0 |
| | | FDPM | 0 | 0 | 0 | 2.51 |
| | Diol | BPEF | 0 | 1.68 | 2.50 | 0.65 |
| | | EG | 2.73 | 3.19 | 2.24 | 2.67 |
| Amount of polymerization catalyst added [g] | Manganese(II) acetate tetrahydrate | | 2.15 | 3.57 | 6.42 | 3.56 |
| | Germanium(IV) oxide | | 11.53 | 11.53 | 11.53 | 11.52 |
| Amount of heat stabilizer added [g] | Phosphoric acid | | 2.53 | 4.05 | 3.80 | 4.05 |
| Evaluation results | | | | | | |
| Copolymer composition [mol%] | Hydroxycarboxylic acid unit = Unit (A) | D-NHEs | 86 | 75 | 70 | 81 |
| | Dicarboxylic acid unit = Unit (C) | DMCD | 7 | 12.5 | 15 | 0 |
| | | FDPM | 0 | 0 | 0 | 9.5 |
| | Diol unit = Unit (B) | BPEF | 0 | 5 | 7 | 2 |
| | | EG | 7 | 7.5 | 8 | 7.5 |
| Weight average molecular weight (Mw) | | | 31000 | 34000 | 39000 | 35000 |
| Glass transition temperature (Tg) [°C] | | | 152 | 147 | 143 | 148 |
| Refractive index (nd) | | | 1.54 | 1.55 | 1.55 | 1.55 |
| Abbe number (vd) | | | 56.0 | 47.7 | 44.5 | 45.0 |

D-NHEs:

Decahydro-1,4:5,8-dimethanonaphthalene-2-methoxycarbonyl-6(7)-methanol

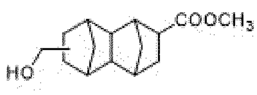

DMCD: Dimethyl 1,4-cyclohexanedicarboxylate (cis/trans = 7/3)

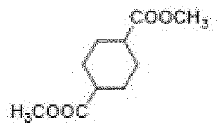

FDPM: 9,9-Bis(2-methoxycarbonylethyl)fluorene (dimethyl fluorenedipropionate)

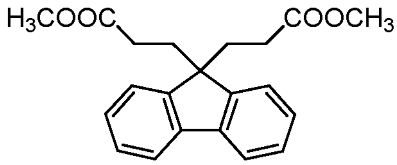

BPEF: 9,9-Bis(4-(2-hydroxyethoxy)phenyl)fluorene (bisphenoxyethanol fluorene)

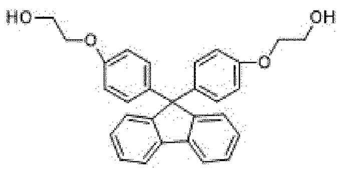

EG: Ethylene glycol

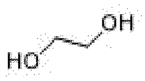

<Synthesis of polycarbonate resin>

<Synthesis Example 5>

20.00 kg (45.61 mol) of 9,9-bis[4-(2-hydroxyethoxy)phenyl]fluorene (BPEF), 10.16 kg (47.43 mol) of diphenyl carbonate (DPC), and 30.00 mg ($3.6 \times 10^{-4}$ mol) of sodium hydrogen carbonate were placed in a 50 L reactor equipped with a stirrer and a distillation unit and heated to 205°C spending 60 minutes in a nitrogen atmosphere at 760 Torr and stirred. The pressure was then reduced to 200 Torr spending 20 minutes and held at 205°C and 200 Torr for 30 minutes. Subsequently, the temperature was increased and the pressure was decreased to 215°C and 180 Torr, respectively, spending 20 minutes, then to 230°C and 150 Torr spending 50 minutes, further to 240°C and 1 Torr or lower spending 60 minutes, and finally held at 240°C and 1 Torr or lower for 20 minutes. Once the reaction solution was confirmed to have reached an appropriate melt viscosity, stirring was stopped, nitrogen was blown into the reactor to increase the pressure, and the resulting polycarbonate resin was collected while pelletizing.

The resulting polycarbonate resin had a polystyrene-equivalent weight average molecular weight (Mw) of 23,000 and a glass transition temperature (Tg) of 145°C.

BPEF: 9,9-Bis[4-(2-hydroxyethoxy)phenyl]fluorene (bisphenoxyethanol fluorene)

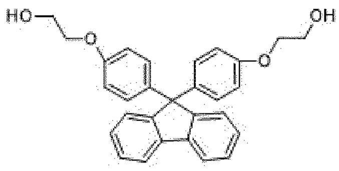

<Synthetic example 6 >

23.50 kg (105.70 mol) of decahydro-1,4:5,8-dimethanonaphthalene-2,6(7)-dimethanol (also referred to as "D-NDM") represented by Structural formula (a) below, 22.98 kg (107.27 mol) of diphenyl carbonate (also referred to as "DPC"), and 130.00 mg ($1.5 \times 10^{-3}$ mol) of sodium hydrogen carbonate were placed in a 50 L reactor equipped with a stirrer and a distillation unit and heated to 205°C spending 60 minutes in a nitrogen atmosphere at 760 Torr and stirred. Then, the pressure was reduced to 200 Torr spending 30 minutes and held at 205°C and 200 Torr for 30 minutes. Subsequently, the temperature was increased and the pressure was decreased to 215°C and 180 Torr, respectively, spending 20 minutes, then to 230°C and 150 Torr spending 40 minutes, further to 240°C and 1 Torr or lower spending 60 minutes, and finally held at 240°C and 1 Torr or lower for 20 minutes. Once the reaction solution was confirmed to have reached an appropriate melt viscosity, stirring was stopped, nitrogen was blown into the reactor to increase the pressure, and the resulting polycarbonate resin was collected while pelletizing.

The resulting polycarbonate resin had a polystyrene-equivalent weight average molecular weight (Mw) of 27,000 and a glass transition temperature (Tg) of 132°C.

D-NDM: Decahydro-1,4:5,8-dimethanonaphthalene-2,6(7)-dimethanol

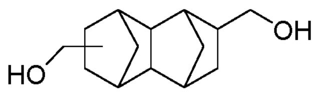

(a)

<Method for producing resin composition>

<Examples 1-8 and Comparative examples 1-4>

The polyester resins obtained in Synthesis Examples 1-4, the polycarbonate resins obtained in Synthesis Examples 5 and 6, an antioxidant, and a mold release agent were dry-mixed using a tumbler in the proportions (in parts by mass) indicated in Table 2 below. Each of the resultants was melt-kneaded using a twin-screw extruder (IPT type 35 mm co-rotating twin-screw extruder manufactured by IPEC Co. Ltd.) at a cylinder temperature of 260°C and a vent pressure of 25 Torr, extruded as a strand, and pelletized to obtain pellets of transparent resin compositions. The evaluation results of the obtained resin compositions are shown in Table 2 below.

Table 2

| | | | Example 1 | Example 2 | Example 3 | Example 4 | Example 5 | Example 6 | Example 7 | Example 8 | Comparative example 1 | Comparative example 2 | Comparative example 3 | Comparative example 4 |
|---|---|---|---|---|---|---|---|---|---|---|---|---|---|---|
| Composition | Polyester resin [parts by mass] | Synthesis example 1 | 92 | 84 | 0 | 0 | 0 | 0 | 0 | 0 | 100 | 0 | 0 | 0 |
| | | Synthesis Example 2 | 0 | 0 | 95 | 77 | 0 | 0 | 0 | 0 | 0 | 100 | 0 | 0 |
| | | Synthesis Example 3 | 0 | 0 | 0 | 0 | 60 | 50 | 40 | 0 | 0 | 0 | 100 | 0 |
| | | Synthesis Example 4 | 0 | 0 | 0 | 0 | 0 | 0 | 0 | 70 | 0 | 0 | 0 | 100 |
| | Polycarbonate resin [parts by mass] | Synthesis Example 5 | 8 | 16 | 5 | 23 | 40 | 50 | 60 | 5 | 0 | 0 | 0 | 0 |
| | | Synthesis Example 6 | 0 | 0 | 0 | 0 | 0 | 0 | 0 | 25 | 0 | 0 | 0 | 0 |
| | Antioxidant [parts by mass] | AO-60 | 0.1 | 0.1 | 0.1 | 0.1 | 0.1 | 0.1 | 0.1 | 0.1 | 0.1 | 0.1 | 0.1 | 0.1 |
| | | PEP-36 | 0.03 | 0.03 | 0.03 | 0.03 | 0.03 | 0.03 | 0.03 | 0.03 | 0.03 | 0.03 | 0.03 | 0.03 |
| | Mold release agent [parts by mass] | NAA-18 0 | 0.2 | 0.2 | 0.2 | 0.2 | 0.2 | 0.2 | 0.2 | 0 | 0.2 | 0.2 | 0.2 | 0 |
| | | M-2222S L | 0 | 0 | 0 | 0 | 0 | 0 | 0 | 0.2 | 0 | 0 | 0 | 0.2 |
| Evaluation results | Weight average molecular weight (Mw) | | 29000 | 29000 | 33000 | 30000 | 31000 | 29000 | 27000 | 31000 | 30000 | 33000 | 37000 | 34000 |
| | Glass transition temperature (Tg) [°C] | | 150 | 150 | 146 | 145 | 143 | 143 | 143 | 141 | 151 | 146 | 142 | 146 |
| | Refractive index (nd) | | 1.54 | 1.55 | 1.55 | 1.57 | 1.59 | 1.59 | 1.60 | 1.55 | 1.54 | 1.55 | 1.55 | 1.55 |
| | Abbe number (vd) | | 49.6 | 45.0 | 45.2 | 38.0 | 32.2 | 30.2 | 28.7 | 44.6 | 56.0 | 47.7 | 44.5 | 45.0 |
| | Continuous formability | | B | B | B | B | B | B | B | A | B’ | B’ | B’ | B’ |

The abbreviations in the table are defined as follows.

AO-60: ADK STAB AO-60 manufactured by ADEKA Corporation
PEP-36: ADK STAB PEP-36 manufactured by ADEKA Corporation
NAA-180: NAA-180 manufactured by NOF Corporation
M-2222SL: UNISTER M-2222SL manufactured by NOF Corporation

Compared to Comparative example 1 which used the same polyester resin, Examples 1 and 2 were able to realize lower Abbe numbers while maintaining almost the same refractive index, and achieved higher Tg (improved heat resistance). Compared to Comparative example 3, Examples 5 to 7 tend to have slightly higher refractive indices, but the resin compositions with reduced Abbe numbers could be obtained. Example 8 had a slightly reduced Abbe number and improved continuous moldability compared to Comparison Example 4.

## Claims

**1.** A resin composition comprising:

a resin containing a structural unit (A) represented by General formula (1) below; and
a resin containing a structural unit (B) represented by General formula (2) below and/or a structural unit (C) represented by General formula (3) below:

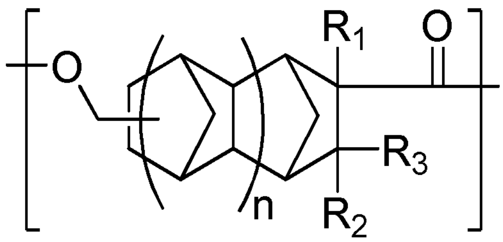
(1)

in General formula (1), $R_1$ represents a hydrogen atom, a methyl group or an ethyl group, $R_2$ and $R_3$ each independently represent a hydrogen atom or a methyl group, and n represents 0 or 1;

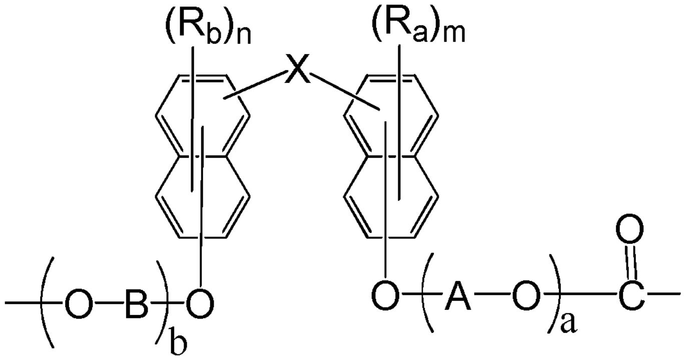
(2)

in General formula (2), $R_a$ and $R_b$ are each independently selected from the group consisting of a hydrogen atom, a halogen atom, a C1-C20 alkyl group, a C1-C20 alkoxyl group, a C5-C20 cycloalkyl group, a C5-C20 cycloalkoxyl group, a C6-C20 aryl group, a C6-C20 heteroaryl group or a C6-C20 aryloxy group containing one or more heteroatoms selected from O, N and S, and -C≡C-$R_h$,
$R_h$ represents a C6-C20 aryl group or a C6-C20 heteroaryl group containing one or more heteroatoms selected from O, N and S,
X represents a single bond or a fluorene group,
A and B each independently represent a C1-C4 alkylene group,
m and n each independently represent an integer from 0 to 6, and
a and b each independently represent an integer from 0 to 10;

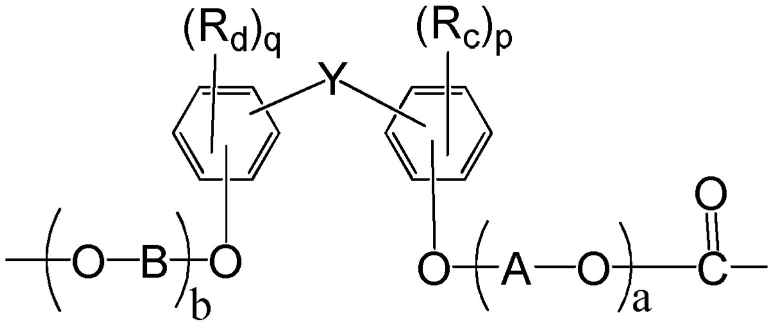

(3)

in General formula (3), $R_c$ and $R_d$ are each independently selected from the group consisting of a hydrogen atom, a halogen atom, a C1-C20 alkyl group, a C1-C20 alkoxyl group, a C5-C20 cycloalkyl group, a C5-C20 cycloalkoxyl group, and a C6-C20 aryl group,
Y represents a fluorene group,
A and B each independently represent a C1-C4 alkylene group,
p and q each independently represent an integer from 0 to 4, and
a and b each independently represent an integer from 0 to 10.

**2.** The resin composition according to Claim 1, wherein the resin containing the structural unit (A) represented by General formula (1) above is a polyester resin, and the resin containing the structural unit (B) represented by General formula (2) above and/or the structural unit (C) represented by General formula (3) above is a polycarbonate resin.

**3.** The resin composition according to Claim 1 or 2, further comprising a resin containing a structural unit (D) represented by General formula (4) below:

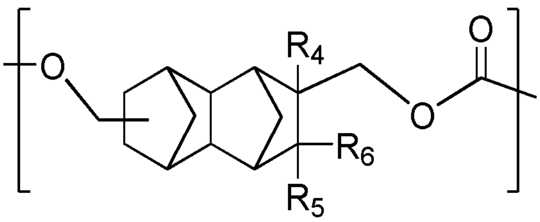

(4)

in General formula (4), $R_4$ represents a hydrogen atom, a methyl group, or an ethyl group, and $R_5$ and $R_6$ each independently represent a hydrogen atom or a methyl group.

**4.** The resin composition according to Claim 3, wherein the resin containing the structural unit (D) represented by General formula (4) above is a polycarbonate resin.

**5.** The resin composition according to any one of Claims 1 to 4, wherein the structural unit (B) represented by General formula (2) above comprises at least one of structural units represented by General formulae (2a) and (2b) below:

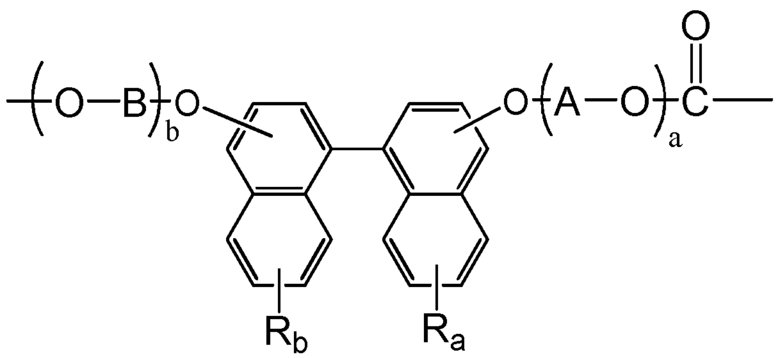

(2a)

in General formula (2a), $R_a$, $R_b$, A, B, a, and b are synonymous with those in General formula (2), respectively;

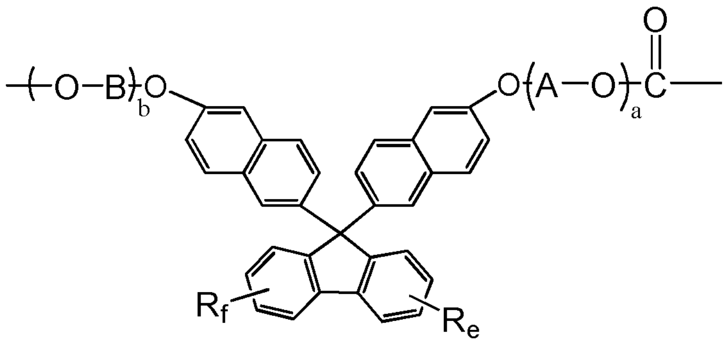

(2b)

in General formula (2b), A, B, a, and b are synonymous with those in General formula (2), respectively; and $R_e$ and $R_f$ are each independently selected from the group consisting of a hydrogen atom, a C1-C20 alkyl group, a C1-C20 alkoxyl group, a C5-C20 cycloalkyl group, a C5-C20 cycloalkoxyl group, a C6-C20 aryl group, and a C6-C20 aryloxy group.

**6.** The resin composition according to any one of Claims 1 to 5, wherein $R_a$ and $R_b$ in General formula (2) above each independently represent a hydrogen atom, a phenyl group, a naphthyl group, or a substituent selected from the group consisting of the following:

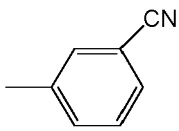 , 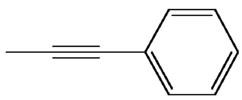 , 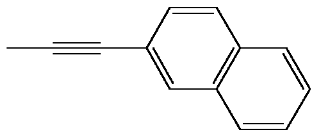 , 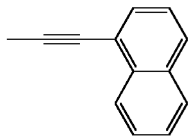 , 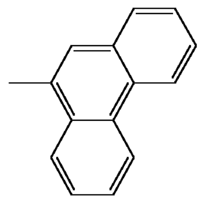 ,

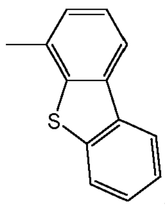 , 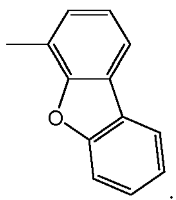 .

**7.** The resin composition according to any one of Claims 1 to 6, wherein the structural unit (C) represented by General formula (3) above comprises a structural unit represented by General formula (3a) below:

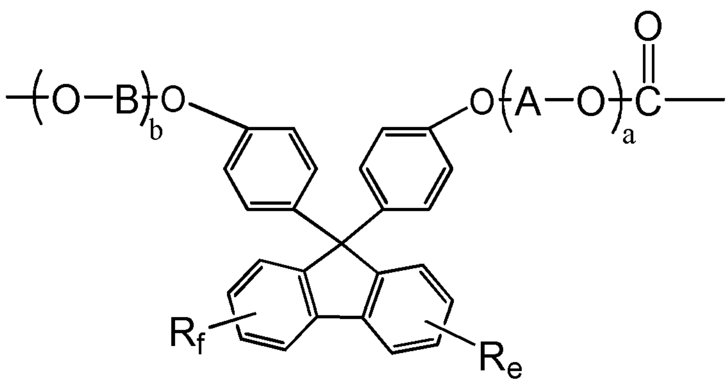

(3a)

in General formula (3a), A, B, a, and b are synonymous with those in General formula (3), respectively; and $R_e$ and

$R_f$ are each independently selected from the group consisting of a hydrogen atom, a C1-C20 alkyl group, a C1-C20 alkoxyl group, a C5-C20 cycloalkyl group, a C5-C20 cycloalkoxyl group, a C6-C20 aryl group, and a C6-C20 aryloxy group.

**8.** The resin composition according to any one of Claims 1 to 7, wherein a mass ratio (A/B) of the structural unit (A) to the structural unit (B) is 99/1 to 1/99.

**9.** The resin composition according to any one of Claims 1 to 8, wherein a mass ratio (A/C) of the structural unit (A) to the structural unit (C) is 99/1 to 1/99.

**10.** The resin composition according to Claim 3 or 4, wherein a mass ratio (A/D) of the structural unit (A) to the structural unit (D) is 99/1 to 1/99.

**11.** The resin composition according to any one of Claims 1 to 10, further comprising an antioxidant.

**12.** The resin composition according to Claim 11, wherein the antioxidant is a phosphite antioxidant and/or a phenolic antioxidant.

**13.** The resin composition according to any one of Claims 1 to 12, wherein $R_1$, $R_2$, and $R_3$ in General formula (1) above represent hydrogen atoms, and n represents 1.

**14.** A molded body comprising the resin composition according to any one of Claims 1 to 13.

**15.** The molded body according to Claim 14, wherein the molded body is an optical lens.

**16.** The molded body according to Claim 14, wherein the molded body is an optical film.

## Patentansprüche

**1.** Harzzusammensetzung umfassend:

ein Harz enthaltend eine Struktureinheit (A), dargestellt durch nachstehende allgemeine Formel (1); und
ein Harz enthaltend eine Struktureinheit (B), dargestellt durch nachstehende allgemeine Formel (2), und/oder eine Struktureinheit (C), dargestellt durch nachstehende allgemeine Formel (3):

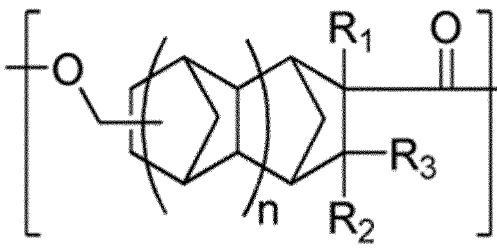
(1)

in der allgemeinen Formel (1), stellt $R_1$ ein Wasserstoffatom, eine Methylgruppe oder eine Ethylgruppe dar, $R_2$ und $R_3$ stellen jeweils unabhängig voneinander ein Wasserstoffatom oder eine Methylgruppe dar, und n stellt 0 oder 1 dar;

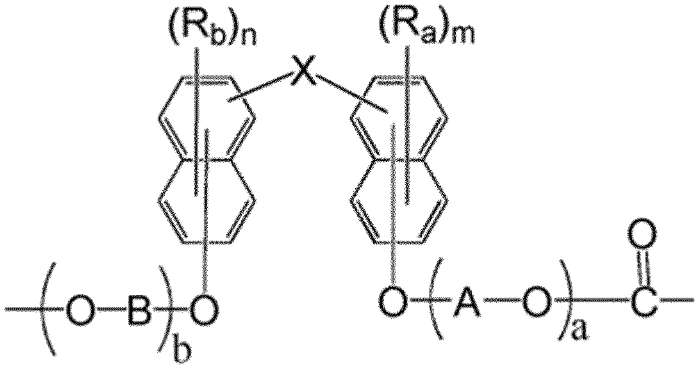

(2)

in der allgemeinen Formel (2), sind $R_a$ und $R_b$ jeweils unabhängig voneinander ausgewählt aus der Gruppe, bestehend aus einem Wasserstoffatom, einem Halogenatom, einer C1-C20-Alkylgruppe, einer C1-C20-Alkoxylgruppe, einer C5-C20-Cycloalkylgruppe, einer C5-C20-Cycloalkoxylgruppe, einer C6-C20-Arylgruppe, einer C6-C20-Heteroarylgruppe, oder einer C6-C20-Aryloxygruppe enthaltend eine oder mehrere Heteroatome, ausgewählt aus O, N und S, und -C=C-Rh,
$R_h$ stellt eine C6-C20-Arylgruppe oder eine C6-C20-Heteroarylgruppe enthaltend eine oder mehrere Heteroatome, ausgewählt aus O, N und S, dar,
X stellt eine Einfachbindung oder eine Fluorengruppe dar,
A und B stellen jeweils unabhängig voneinander eine C1-C4-Alkylengruppe dar,
m und n stellen jeweils unabhängig voneinander eine ganze Zahl von 0 bis 6 dar, und
a und b stellen jeweils unabhängig voneinander eine ganze Zahl von 0 bis 10 dar;

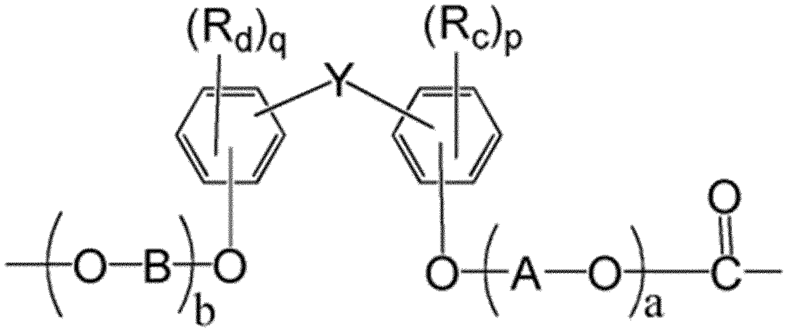

(3)

in der allgemeinen Formel (3), sind $R_c$ und $R_d$ jeweils unabhängig voneinander ausgewählt aus der Gruppe, bestehend aus einem Wasserstoffatom, einem Halogenatom, einer C1-C20-Alkylgruppe, einer C1-C20-Alkoxylgruppe, einer C5-C20-Cycloalkylgruppe, einer C5-C20-Cycloalkoxylgruppe, und einer C6-C20-Arylgruppe,
Y stellt eine Fluorengruppe dar,
A und B stellen jeweils unabhängig voneinander eine C1-C4-Alkylengruppe dar,
p und q stellen jeweils unabhängig voneinander eine ganze Zahl von 0 bis 4 dar, und
a und b stellen jeweils unabhängig voneinander eine ganze Zahl von 0 bis 10 dar.

**2.** Harzzusammensetzung gemäß Anspruch 1, wobei das Harz enthaltend die Struktureinheit (A), dargestellt durch obige allgemeine Formel (1), ein Polyesterharz ist, und das Harz enthaltend die Struktureinheit (B), dargestellt durch obige allgemeine Formel (2), und/oder die Struktureinheit (C), dargestellt durch obige allgemeine Formel (3), ein Polycarbonatharz ist.

**3.** Harzzusammensetzung gemäß Anspruch 1 oder 2, ferner umfassend ein Harz enthaltend eine Struktureinheit (D), dargestellt durch nachstehende allgemeine Formel (4):

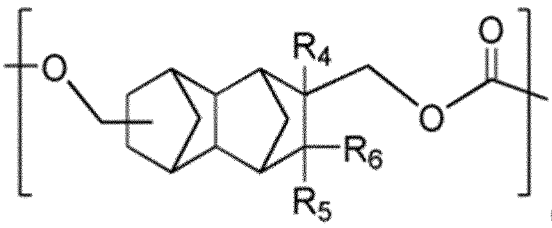

(4)

in der allgemeinen Formel (4), stellt $R_4$ ein Wasserstoffatom, eine Methylgruppe, oder eine Ethylgruppe dar, und $R_5$ und $R_6$ stellen jeweils unabhängig voneinander ein Wasserstoffatom oder eine Methylgruppe dar.

**4.** Harzzusammensetzung gemäß Anspruch 3, wobei das Harz enthaltend die Struktureinheit (D), dargestellt durch obige allgemeine Formel (4), ein Polycarbonatharz ist.

**5.** Harzzusammensetzung gemäß mindestens einem der Ansprüche 1 bis 4, wobei die Struktureinheit (B), dargestellt durch obige allgemeine Formel (2), mindestens eine der Struktureinheiten, dargestellt durch nachstehende allgemeine Formeln (2a) und (2b), umfasst:

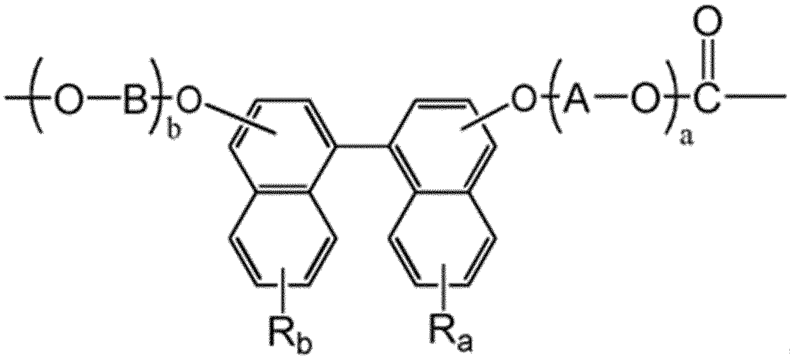

(2a)

in der allgemeinen Formel (2a), sind $R_a$, $R_b$, A, B, a und b gleichbedeutend mit denen der allgemeinen Formel (2);

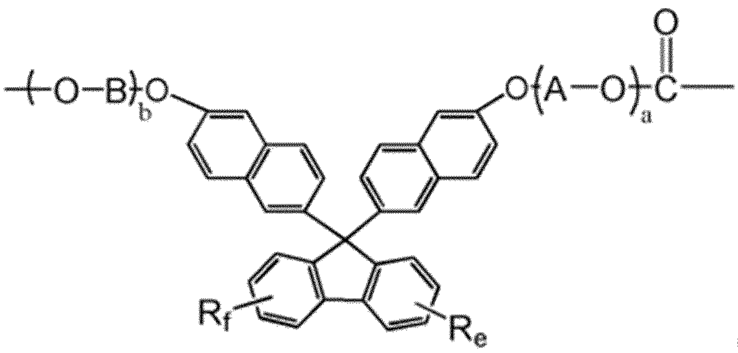

(2b)

in der allgemeinen Formel (2b), sind A, B, a und b gleichbedeutend mit denen der allgemeinen Formel (2); und $R_e$ und $R_f$ sind jeweils unabhängig voneinander ausgewählt aus der Gruppe, bestehend aus einem Wasserstoffatom, einer C1-C20-Alkylgruppe, einer C1-C20-Alkoxylgruppe, einer C5-C20-Cycloalkylgruppe, einer C5-C20-Cycloalkoxylgruppe, einer C6-C20-Arylgruppe, und einer C6-C20-Aryloxygruppe.

**6.** Harzzusammensetzung gemäß mindestens einem der Ansprüche 1 bis 5, worin $R_a$ und $R_b$ in der obigen allgemeinen Formel (2) jeweils unabhängig voneinander darstellen ein Wasserstoffatom, eine Phenylgruppe, eine Naphthylgruppe, oder einen Substituenten, ausgewählt aus der Gruppe, bestehend aus den folgenden:

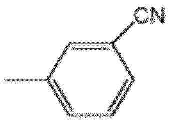, 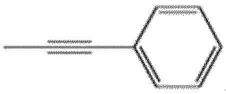, 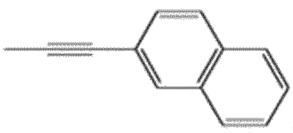, 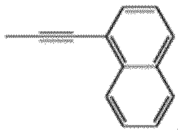, 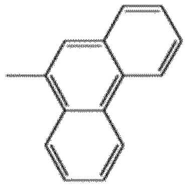,

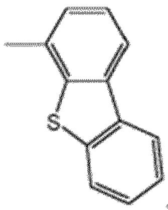, 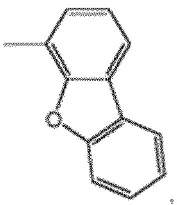.

**7.** Harzzusammensetzung gemäß mindestens einem der Ansprüche 1 bis 6, wobei die Struktureinheit (C), dargestellt durch obige allgemeine Formel (3), umfasst eine Struktureinheit, dargestellt durch nachstehende allgemeine Formel (3a):

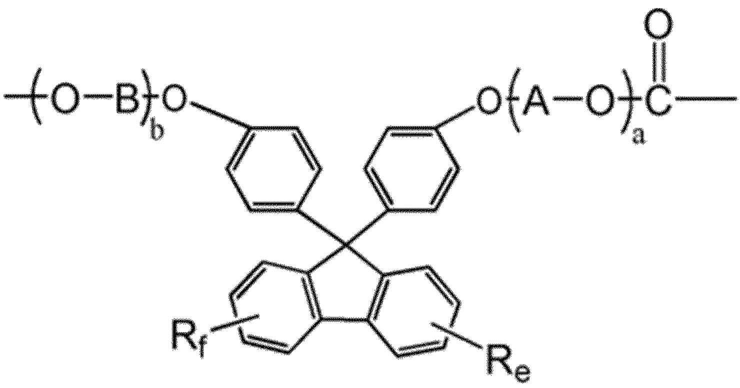

(3a)

in der allgemeinen Formel (3a), sind A, B, a und b gleichbedeutend mit denen der allgemeinen Formel (3); und $R_e$ und $R_f$ sind jeweils unabhängig voneinander ausgewählt aus der Gruppe, bestehend aus einem Wasserstoffatom, einer C1-C20-Alkylgruppe, einer C1-C20-Alkoxylgruppe, einer C5-C20-Cycloalkylgruppe, einer C5-C20-Cycloalkoxylgruppe, einer C6-C20-Arylgruppe, und einer C6-C20-Aryloxygruppe.

**8.** Harzzusammensetzung gemäß mindestens einem der Ansprüche 1 bis 7, wobei das Massenverhältnis (A/B) der Struktureinheit (A) zu der Struktureinheit (B) 99/1 bis 1/99 beträgt.

**9.** Harzzusammensetzung gemäß mindestens einem der Ansprüche 1 bis 8, wobei das Massenverhältnis (A/C) der Struktureinheit (A) zu der Struktureinheit (C) 99/1 bis 1/99 beträgt.

**10.** Harzzusammensetzung gemäß Anspruch 3 oder 4, wobei das Massenverhältnis (A/D) der Struktureinheit (A) zu der Struktureinheit (D) 99/1 bis 1/99 beträgt.

**11.** Harzzusammensetzung gemäß mindestens einem der Ansprüche 1 bis 10, ferner umfassend ein Antioxidationsmittel.

**12.** Harzzusammensetzung gemäß Anspruch 11, wobei das Antioxidationsmittel ein Phosphit-Antioxidationsmittel und/oder ein phenolisches Antioxidationsmittel ist.

**13.** Harzzusammensetzung gemäß mindestens einem der Ansprüche 1 bis 12, worin $R_1$, $R_2$ und $R_3$ der obigen allgemeinen Formel (1) Wasserstoffatome darstellen, und n 1 darstellt.

**14.** Formkörper umfassend die Harzzusammensetzung gemäß mindestens einem der Ansprüche 1 bis 13.

**15.** Formkörper gemäß Anspruch 14, wobei der Formkörper eine optische Linse ist.

**16.** Formkörper gemäß Anspruch 14, wobei der Formkörper ein optischer Film ist.

## Revendications

**1.** Composition de résine comprenant :

une résine contenant un motif structural (A) représenté par la formule générale (1) ci-dessous ; et
une résine contenant un motif structural (B) représenté par la formule générale (2) ci-dessous et/ou un motif structural (C) représenté par la formule générale (3) ci-dessous :

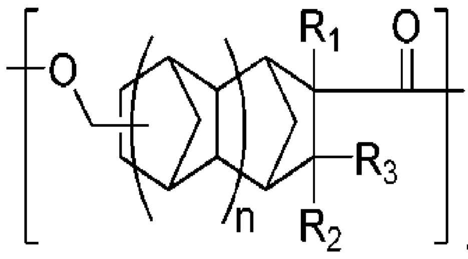

(1)

dans la formule générale (1), $R_1$ représente un atome d'hydrogène, un groupe méthyle ou un groupe éthyle, $R_2$ et $R_3$ représentent chacun indépendamment un atome d'hydrogène ou un groupe méthyle, et n représente 0 ou 1 ;

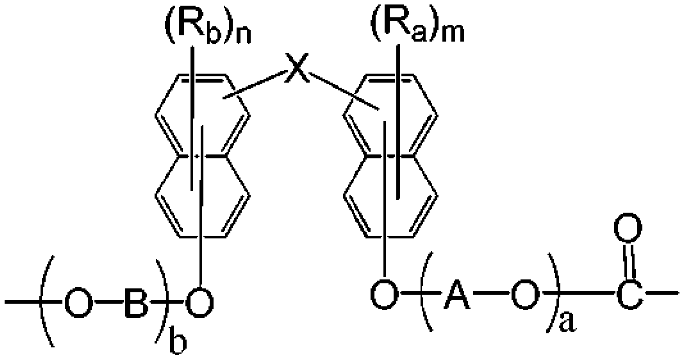

(2)

dans la formule générale (2), $R_a$ et $R_b$ sont chacun indépendamment sélectionnés parmi le groupe constitué d'un atome d'hydrogène, d'un atome d'halogène, d'un groupe alkyle en C1-C20, d'un groupe alcoxyle en C1-C20, d'un groupe cycloalkyle en C5-C20, d'un groupe cycloalcoxyle en C5-C20, d'un groupe aryle en C6-C20, d'un groupe hétéroaryle en C6-C20 ou d'un groupe aryloxy en C6-C20 contenant un ou plusieurs hétéroatomes sélectionnés parmi O, N et S, et $-C\equiv C-R_h$,
$R_h$ représente un groupe aryle en C6-C20 ou un groupe hétéroaryle en C6-C20 contenant un ou plusieurs hétéroatomes sélectionnés parmi O, N et S,
X représente une simple liaison ou un groupe fluorène,
A et B représentent chacun indépendamment un groupe alkylène en C1-C4,
m et n représentent chacun indépendamment un nombre entier de 0 à 6, et
a et b représentent chacun indépendamment un nombre entier de 0 à 10 ;

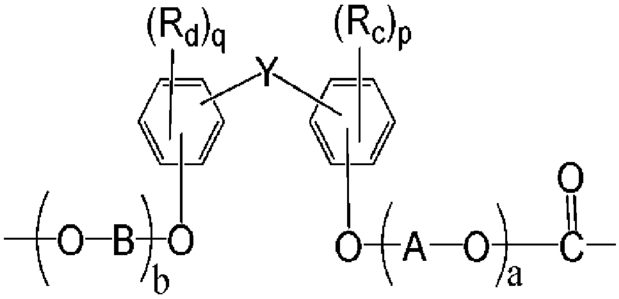

(3)

dans la formule générale (3), $R_c$ et $R_d$ sont chacun indépendamment sélectionnés parmi le groupe constitué d'un atome d'hydrogène, d'un atome d'halogène, d'un groupe alkyle en C1-C20, d'un groupe alcoxyle en C1-C20, d'un groupe cycloalkyle en C5-C20, d'un groupe cycloalcoxyle en C5-C20 et d'un groupe aryle en C6-C20,
Y représente un groupe fluorène,
A et B représentent chacun indépendamment un groupe alkylène en C1-C4,
p et q représentent chacun indépendamment un nombre entier de 0 à 4, et
a et b représentent chacun indépendamment un nombre entier de 0 à 10.

**2.** Composition de résine selon la revendication 1, dans laquelle la résine contenant le motif structural (A) représenté par la formule générale (1) ci-dessus est une résine de polyester, et la résine contenant le motif structural (B) représenté par la formule générale (2) ci-dessus et/ou le motif structural (C) représenté par la formule générale (3) ci-dessus est une résine de polycarbonate.

**3.** Composition de résine selon la revendication 1 ou la revendication 2, comprenant en outre une résine contenant un motif structural (D) représenté par la formule générale (4) ci-dessous :

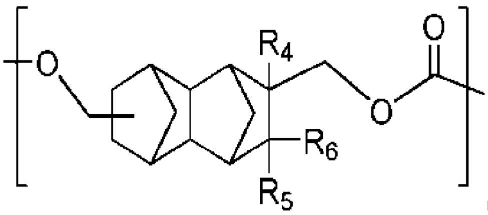

(4)

dans la formule générale (4), $R_4$ représente un atome d'hydrogène, un groupe méthyle ou un groupe éthyle, et $R_5$ et $R_6$ représentent chacun indépendamment un atome d'hydrogène ou un groupe méthyle.

**4.** Composition de résine selon la revendication 3, dans laquelle la résine contenant le motif structural (D) représenté par la formule générale (4) ci-dessus est une résine de polycarbonate.

**5.** Composition de résine selon l'une quelconque des revendications 1 à 4, dans laquelle le motif structural (B) représenté par la formule générale (2) ci-dessus comprend au moins un des motifs structuraux représentés par les formules générales (2a) et (2b) ci-dessous :

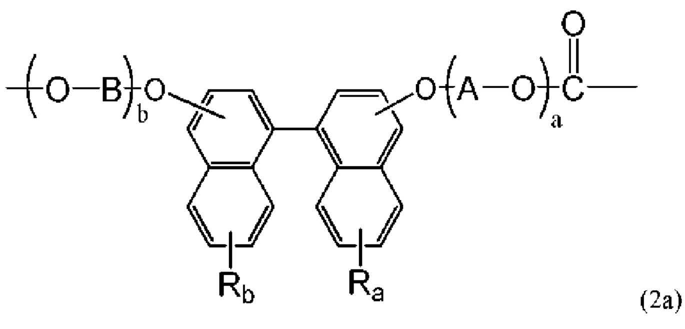

(2a)

dans la formule générale (2a), $R_a$, Rb, A, B, a et b sont synonymes de ceux dans la formule générale (2), respectivement ;

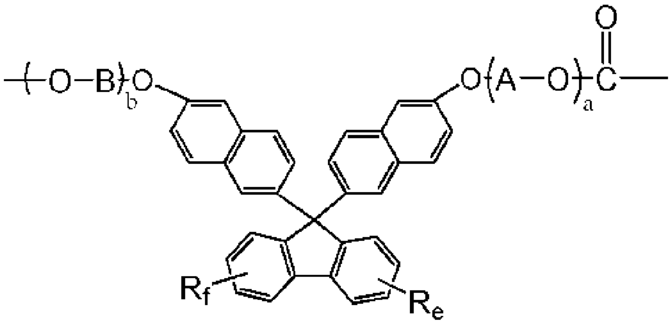

(2b)

dans la formule générale (2b), A, B, a et b sont synonymes de ceux dans la formule générale (2), respectivement ; et $R_e$ et $R_f$ sont chacun indépendamment sélectionnés parmi le groupe constitué d'un atome d'hydrogène, d'un groupe alkyle en C1-C20, d'un groupe alcoxyle en C1-C20, d'un groupe cycloalkyle en C5-C20, d'un groupe cycloalcoxyle en C5-C20, d'un groupe aryle en C6-C20 et d'un groupe aryloxy en C6-C20.

**6.** Composition de résine selon l'une quelconque des revendications 1 à 5, dans laquelle $R_a$ et $R_b$ dans la formule générale (2) ci-dessus représentent chacun indépendamment un atome d'hydrogène, un groupe phényle, un groupe naphtyle ou un substituant sélectionné parmi le groupe constitué des éléments suivants :

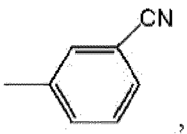 , 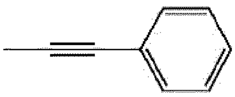 , 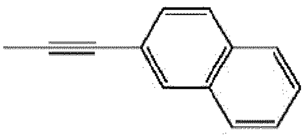 , 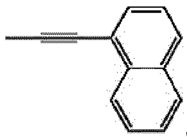 , 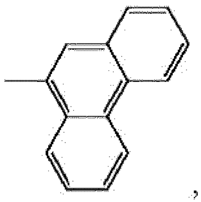 ,

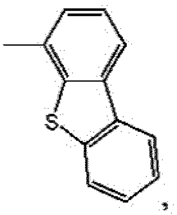 , 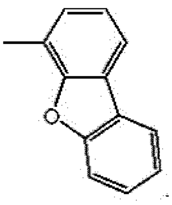 .

**7.** Composition de résine selon l'une quelconque des revendications 1 à 6, dans laquelle le motif structural (C) représenté par la formule générale (3) ci-dessus comprend un motif structural représenté par la formule générale (3a) ci-dessous :

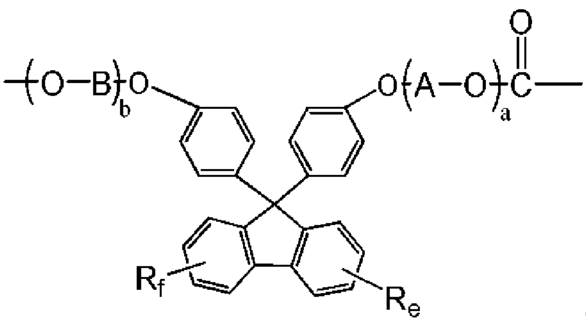

(3a)

dans la formule générale (3a), A, B, a, et b sont synonymes de ceux dans la formule générale (3), respectivement ; et $R_e$ et $R_f$ sont chacun indépendamment sélectionnés parmi le groupe constitué d'un atome d'hydrogène, d'un

groupe alkyle en C1-C20, d'un groupe alcoxyle en C1-C20, d'un groupe cycloalkyle en C5-C20, d'un groupe cycloalcoxyle en C5-C20, d'un groupe aryle en C6-C20 et d'un groupe aryloxy en C6-C20.

**8.** Composition de résine selon l'une quelconque des revendications 1 à 7, dans laquelle un rapport de masse (A/B) du motif structural (A) sur le motif structural (B) est 99/1 à 1/99.

**9.** Composition de résine selon l'une quelconque des revendications 1 à 8, dans laquelle un rapport de masse (A/C) du motif structural (A) sur le motif structural (C) est 99/1 à 1/99.

**10.** Composition de résine selon la revendication 3 ou la revendication 4, dans laquelle un rapport de masse (A/D) du motif structural (A) sur le motif structural (D) est 99/1 à 1/99.

**11.** Composition de résine selon l'une quelconque des revendications 1 à 10, comprenant en outre un antioxydant.

**12.** Composition de résine selon la revendication 11, dans laquelle l'antioxydant est un antioxydant phosphite et/ou un antioxydant phénolique.

**13.** Composition de résine selon l'une quelconque des revendications 1 à 12, dans laquelle $R_1$, $R_2$ et $R_3$ dans la formule générale (1) ci-dessus représentent des atomes d'hydrogène, et n représente 1.

**14.** Corps moulé comprenant la composition de résine selon l'une quelconque des revendications 1 à 13.

**15.** Corps moulé selon la revendication 14, dans laquelle le corps moulé est une lentille optique.

**16.** Corps moulé selon la revendication 14, dans laquelle le corps moulé est un film optique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5849967 B
- WO 2015163323 A1
- WO 201862327 A1
- JP 5442800 B